# EUROPEAN PATENT APPLICATION

(11) **EP 4 491 674 A1**
(43) Date of publication of application: **15.01.2025**
(21) Application number: 23766855.3
(22) Date of filing: 07.03.2023
(51) Int. Cl.: C08L 101/00, C08K 5/17, C08K 5/20, C11D 7/32, C11D 7/50, G02F 1/1337, H01M 4/62, H01M 10/052, H01M 10/0569

(54) **COMPOSITION CONTAINING HIGHLY SAFE AMIDE COMPOUND**

(30) Priority: 08.03.2022 JP 2022035731
(71) Applicant: KJ Chemicals Corporation, Tokyo 103-0023 (JP)
(72) Inventor: HIRATA Meiri, Tokyo 103-0023 (JP); KIYOSADA Toshitsugu, Yatsushiro-shi Kumamoto 866-0081 (JP); MASUDA Hideki, Yatsushiro-shi Kumamoto 866-0081 (JP)
(74) Representative: ABG Intellectual Property Law, S.L.
(86) International application number: PCT/JP2023/008624
(87) International publication number: WO 2023/171679

(57) **Abstract**

[Problems] To provide a composition which has high solubility for water, various organic substances, and inorganic substances, do not have harmfulness such as irritation and toxicity, can be stored and used industrially and stably for a long-term, and can be easily used for various industrial applications as a solvent for chemical reaction or resin synthesis, a solvent for analysis, a solvent for dissolving resins, paints, inks, etc., a diluent for dilution, a dispersant for dispersion,etc., a cleaning agent for cleaning a manufacturing facility, a metal part, an electronic part, etc., a stripping agent for stripping a resist, resin, etc., a liquid crystal alignment treatment agent for alignment treatment of liquid crystal molecules, a nonaqueous electrolytic solution for producing a battery, etc., and various preparations and products containing the composition. [Solution] A composition including: a compound (A) having an N-substituted and/ N,N-disubstituted amide group; and a neutralized salt (B) of an acidic compound and a basic compound.

## Description

### TECHNICAL FIELD

The present invention relates to a composition containing a highly safe amide compound and applications thereof.

### BACKGROUND

Amide compounds, as amide-based solvents, well dissolve water, various organic substances, and inorganic substances, have high boiling point and high flash point, and are thermally and chemically stable. In particular, the amide compounds which are liquid at room temperature are widely industrially used as amide-based solvents for reaction or purification, cleaning agents, resist stripping agents, etc. Conventionally, N-methyl-2-pyrrolidone (NMP), dimethylformamide (DMF), and dimethylacetamide (DMAC) have been typically known as amide-based solvents, but these compounds have some problems of harmfulness to the human body, such as skin irritation, carcinogenicity (mutagenicity), reproductive toxicity (teratogenicity), or suspicion thereof.

In order to solve the problem of low safety of amide-based solvents such as NMP and DMF, attention has been focused on N-butyl-2-pyrrolidone (NBP) and 3-methoxy-N,N-dimethylpropanamide (KJCMPA (registered trademark)) as amide-based solvents which do not have skin irritation, mutagenicity, teratogenicity, etc., have high safety and solubility for various organic compounds and synthetic resins. PATENT LITERATURES 1 and 2 disclose that NBP or KJCMPA is used as a solvent for synthesis of polyimide precursors, polyimide resins etc., instead of NMP. In these patent literatures, it has been confirmed that NBP or KJCMPA has a solubility comparable to that of the conventional solvent NMP, however various problems that occur with conventional amide solvents such as NMP remain unsolved. The various problems are, for example, that the molecular weight of a polyimide precursor is hardly increased, solution stability of a polyimide precursor is low (it is likely to be clouded), whitening is likely to occur during polyimide film formation, and surface unevenness is likely to occur.

Further, although polyurethane is a plastic material, it is soft like rubber and excellent in tensile strength, abrasion resistance, elasticity, and oil resistance. It is used in various industrial products ranging, from daily necessities such as soles of sports shoes and clothing, to industrial materials such as soundproofing materials, heat-retaining materials, adhesives, and automobile materials such as bumpers and headrests. There are various methods for synthesizing polyurethane depending on its structures and applications, and since urethanization reaction involves exothermic reaction, many thermoplastic polyurethanes are stably synthesized by a solution polymerization method. In particular, to increase the molecular weight of polyurethanes, DMF and the like are often used as polar solvents in which the polyurethanes produced can be uniformly dissolved. However, as described above, there is still a concern about a safety problem caused by DMF.

There is a demand for a composition which contains an amide compound having excellent solubility and high safety as described above and which can be easily used for various industrial applications such as synthesis, dissolution, dilution, and the likes of various resins, dispersion of pigments, and stripping of resist resins.

### CITATION LIST

### PATENT LITERATURES

PATENT LITERATURE 1: JP-T-2017-517582
PATENT LITERATURE 2: JP-T-2015-511935

### SUMMARY OF THE INVENTION

### PROBLEMS TO BE SOLVED BY THE INVENTION

The present invention aims to provide a composition which has high solubility for water, various organic substances, and inorganic substances, does not have harmfulness such as irritation and toxicity, can be stored and used industrially and stably for a long-term, and can be easily used for various industrial applications, such as a solvent for chemical reactions or resin synthesis, a solvent for analysis, a solvent for dissolving resins, paints, inks, etc., a diluent for dilution, a dispersant for dispersion, etc., a cleaning agent for cleaning a manufacturing equipment, metal parts, and electronic parts, etc., a stripping agent for stripping resists, resins, and metals, etc., a liquid crystal alignment treatment agent for alignment treatment of liquid crystal molecules, a nonaqueous electrolytic solution for producing batteries, etc., and various preparations and products containing the composition.

### SOLUTIONS TO THE PROBLEMS

The inventors conducted extensive research to solve the above problem, and as a result have found a composition containing a compound (A) having an N-substituted and/or N,N-disubstituted amide group, and a neutralized salt (B) of an acidic compound and a basic compound, and have completed the present invention.

That is, the present invention is based on the following configuration.
(1) A composition including a compound (A) having an N-substituted and/or N,N-disubstituted amide group, and a neutralized salt (B) of an acidic compound and a basic compound.
(2) The composition according to (1), further including an acidic compound that forms the neutralized salt (B), in which the composition has an acid value of 0.1 to 40 mgKOH/g.
(3) The composition according to (1) or (2), in which the compound (A) is an N-substituted and/or N,N-disubstituted propanamide represented by General Formula (1) below. 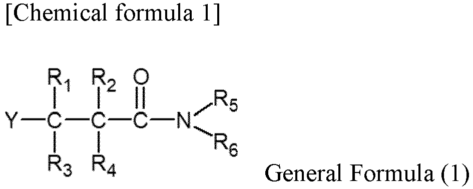 (In the formula, R₅ and R₆ each independently represent a C1-18 linear or branched saturated or unsaturated alkyl, hydroxyalkyl, aminoalkyl, or alkyl ether group, or each independently represent a C6-18 alicyclic or aromatic hydrocarbon, and R₁ to R₄ each independently represent a hydrogen atom, a methyl group, or a hydroxyl group. R₅ and R₆ each independently include a hydrogen atom (except for a case of being simultaneously a hydrogen atom) or one that forms a saturated 5- to 7-membered ring (including one having an oxygen atom) together with a nitrogen atom carrying them.) Y represents a hydrogen atom, a hydroxyl group, an amine group, a C1-18 linear or branched saturated or unsaturated alkyl group, a C6-18 alicyclic or aromatic hydrocarbon, or an alkoxy or amino group represented by General Formula (2) or (3) (in the formula, R₇ indicates a C1-6 linear or branched alkyl or alkenyl group, and R₈ and R₉ each independently indicate a hydrogen atom or a C1-18 linear or branched alkyl or alkyl ether group or alicyclic or aromatic hydrocarbon (except for a case of R₈ and R₉ being simultaneously a hydrogen atom). R₈ and R₉ may be one that forms a saturated 5- to 7-membered ring (including one having an oxygen atom) together with a nitrogen atom carrying them.)

   [Chemical formula 2] R₇-O- General Formula (2) 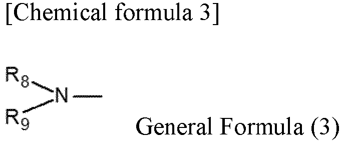
(4) The composition according to any one of (1) to (3), in which the compound (A) is a β-alkoxy-N-substituted propanamide and/or a β-alkoxy-N,N-disubstituted propanamide represented by General Formula (4). 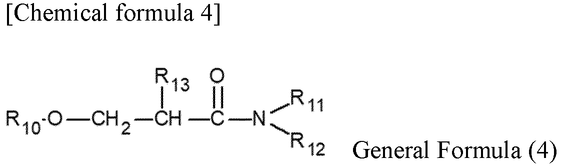 (In the formula, R₁₀ represents a C1-18 linear or branched alkyl group, R₁₁ and R₁₂ each independently represent a hydrogen atom or a C1-4 linear or branched alkyl group (except for a case of being simultaneously a hydrogen atom), and R₁₃ represents a hydrogen atom or a methyl group.)
(5) The composition according to any one of (1) to (3), in which the acidic compound is an inorganic and/or organic acid, and the basic compound is an inorganic and/or organic base.
(6) The composition according to any one of (1) to (5), further including a compound (C) having one or more types and or more groups selected from an ether group, an ester group, a hydroxyl group, a urea group, an aryl group, and a sulfinyl group.
(7) A solvent including the composition according to any one of (1) to (6), in which the solvent is used for dissolving resins, paints, inks, adhesives, pharmaceuticals, agricultural chemicals, fragrances, pigments, dyes, cellulose derivatives, organosilicon polymers, and conductive materials.
(8) A diluent including the composition according to any one of (1) to (6), in which the diluent is used for diluting resins, paints, inks, adhesives, pharmaceuticals, agricultural chemicals, fragrances, pigments, dyes, cellulose derivatives, organosilicon polymers, and conductive materials.
(9) A dispersant including the composition according to any one of (1) to (6), in which the dispersant is used for dispersing resins, paints, inks, adhesives, pharmaceuticals, agricultural chemicals, fragrances, pigments, dyes, cellulose derivatives, organosilicon polymers, conductive materials, and carbon materials.
(10) A solvent including the composition according to any one of (1) to (6), in which the solvent is used for chemical reaction.
(11) A solvent including the composition according to any one of (1) to (6), in which the solvent is used for analysis by HPLC (liquid chromatography) and/or GPC (gel permeation chromatography).
(12) A cleaning agent including the composition according to any one of (1) to (6), in which the cleaning agent is used for cleaning liquid flow paths of a manufacturing facility, a manufacturing instrument, an industrial product, an industrial part, a plastic molded article, a metal part, an electronic part, a recording device filter, a three-dimensional object, an inkjet nozzle, and an ink cartridge.
(13) A stripping agent including the composition according to any one of (1) to (6), in which the stripping agent is used for stripping an organic coating film layer on a surface of a plastic molded article, a support material for a three-dimensional object, a resist on a metal thin film, UV resin, urethane resin, and epoxy resin.
(14) A liquid crystal alignment treatment agent including the composition according to any one of (1) to (6), in which the liquid crystal alignment treatment agent is used for alignment treatment of liquid crystal molecules.
(15) A nonaqueous electrolytic solution including the composition according to any one of (1) to (6), in which the nonaqueous electrolytic solution is used for producing a secondary battery.

### EFFECTS OF THE INVENTION

The composition of the present invention can be stored and used industrially and stably for a long period of time, has excellent solubility for water, various organic substances, and inorganic substances. The composition is high in safety and easily used for various industrial applications. The composition includes, as essential components, a compound (A) having an N-substituted and/or N,N-disubstituted amide group (hereinafter, also referred to as an amide compound (A)), and a neutralized salt (B) of an acidic compound and a basic compound (hereinafter, also referred to as a neutralized salt (B)). The compound (A) has excellent solubility for organic substances including synthetic resin, excellent solubility or dispersion for inorganic substances, and high safety. Therefore, the composition obtained by containing the compound (A) is high in solubility and safety, and can be used as various solvents, diluents, dispersants, cleaning agents, stripping agents, liquid crystal alignment treatment agents, and nonaqueous electrolytic solutions. The neutralized salt (B) does not have harmfulness such as irritation and toxicity similarly to the compound (A), can be easily dissolved or dispersed in the compound (A), and has an effect of improving the stability of the compound (A). The composition obtained by containing the neutralized salt (B) can be stored stably for a long period of time, and can be used suitably for the above-described various industrial applications for a long period of time. The amide group of the compound (A) exhibits basicity due to the presence of an electron-donating nitrogen atom, and its basicity varies depending on the type and number of substituents bonded to the nitrogen atom (N-substituted or N,N-disubstituted) when the composition is used as a solvent for chemical reaction or resin synthesis, the reaction may be accelerated or decelerated, or side reaction may be caused. The coexistence of neutralizing salt (B) with such amide compound (A) suppresses the effects caused by the basicity of the amide group. Therefore, the stability of the composition is improved, it can be stored for a long period of time in various industrial applications.

### DESCRIPTION OF THE EMBODIMENTS

Hereinafter, the present invention will be described in detail.

An embodiment of the present invention is a composition (F) including a compound (A) having an N-substituted and/or N,N-disubstituted amide group, and a neutralized salt (B) of an acidic compound and a basic compound. The content of the compound (A) is preferably 25 to 99.999 % by mass with respect to the total amount of the composition (F). The content of (A) is more preferably 50 to 99.99 % by mass and particularly preferably 70 to 99.8 % by mass. It is preferably that composition (F) contain (A) in an amount of 25 % by mass or more, since it has sufficient solubility for various organic substances, synthetic resins, paints, inks, etc. When (A) is contained in an amount of 99.999 % by mass or less, it is possible to contain 0.001 % by mass or more of the neutralized salt (B). By containing (B), the stability of the composition (F) is improved, and the effects of improving the storage stability and transparency and increasing the molecular weight of the resins synthesized in (F) can be achieved, and it is preferably.

The compound (A) having an N-substituted and/or N,N-disubstituted amide group, preferably has a molecular weight of 100 or more. When the molecular weight of (A) is 100 or more, both safety and solubility are improved. Examples of the compound (A) include N-alkyl (preferably 4 or more carbon atoms) -2-pyrrolidone such as N-butyl-2-pyrrolidone and N-hexyl-2-pyrrolidone; N-alkyl (1 or more carbon atoms) alkane (preferably 4 or more carbon atoms) amide such as N-ethylhexanamide and N-butylbutanamide; N,N-dialkyl (1 or more carbon atoms) alkane (preferably 3 or more carbon atoms) amide such as N,N-dimethylpropanamide, N,N-dimethylisobutanamide, N,N-dimethylbutanamide, N,N-diethylbutanamide, and N,N-dimethyloctanamide; alkoxy (1 or more carbon atoms) -N-alkyl (1 or more carbon atoms) alkane (preferably 3 or more carbon atoms) amide such as 3-ethoxy-N-methylpropanamide and 4-hexyloxy-N-ethylbutanamide; alkoxy (1 or more carbon atoms) -N-hydroxyalkyl (1 or more carbon atoms) alkane (preferably 2 or more carbon atoms) amide such as stearoxy-N-hydroxyethylpropanamide; alkoxy (1 or more carbon atoms) -N-dialkyl (1 or more carbon atoms) aminoalkyl (1 or more carbon atoms) alkane (preferably 2 or more carbon atoms) amide such as isooctyloxy-N-dimethylaminopropylpropanamide; alkoxy (1 or more carbon atoms) -N,N-dialkyl (1 or more carbon atoms) alkane (preferably having 3 or more carbon atoms) amide such as 3-methoxy-N,N-dimethylpropanamide, 3-butoxy-N,N-dimethylpropanamide, 3-lauroxy-N,N-dimethylpropanamide, 4-ethoxy-N,N-dimethylbutanamide, 3-phenyloxy-N-ethyl-N-methylpropanamide, and 3-cyclohexyloxy-N-methyl-N-oleylpropanamide; alkanoyl (1 or more carbon atoms) morpholine such as 4-formylmorpholine, 4-acetylmorpholine, 4-propionylmorpholine, 4-butanoylmorpholine, 4-hexanoylmorpholine, and 4-octanoylmorpholine; alkoxy (1 or more carbon atoms) alkanoyl (preferably 2 or more carbon atoms) morpholine such as 4-methoxyethanoylmorpholine and 4-(3-methoxypropynoyl) morpholine; dialkyl (1 or more carbon atoms) amino-N,N-dialkyl (1 or more carbon atoms) propanamide such as 3-dimethylamino-N,N-dimethylpropanamide and 3-diethylamino-N,N-diethylpropanamide; and N,N-dialkyl (preferably 2 or more carbon atoms) acetamide such as N,N-diethylacetamide, N,N-dipropylacetamide, N,N-diisopropylacetamide, N,N-dibutylacetamide, N,N-diisobutylacetamide, and N,N-dihexylacetamide. These compounds (A) may be used singly or in combination of two or more.

The compound (A) is preferably N-substituted and/or N,N-disubstituted propanamide represented by General Formula (1), because inexpensive industrial products are easily available (where R₁ to R₉ and Y are all as described above).

### [Chemical formula 5]

### General Formula (1)

The compound (A) represented by General Formula (1) is preferably N-alkyl (1 or more carbon atoms) alkane (2 or more carbon atoms) amide, N,N-dialkyl (1 or more carbon atoms) alkane (2 or more carbon atoms) amide, alkoxy (1 or more carbon atoms) -N-alkyl (1 or more carbon atoms) alkane (2 or more carbon atoms) amide, alkoxy (1 or more carbon atoms) -N,N-dialkyl (1 or more carbon atoms) alkane (2 or more carbon atoms) amide, dialkyl (1 or more carbon atoms) amino-N,N-dialkyl (1 or more carbon atoms) propanamide, etc., in which Y is a hydrogen atom, a C1-18 linear or branched saturated or unsaturated alkyl group, a C1-18 linear or branched saturated or unsaturated alkoxy group, or a C1-18 linear or branched saturated or unsaturated amino group. These compounds (A) may be used singly or in combination of two or more.

The compound (A) is more preferably β-alkoxy-N-substituted propanamide and/or β-alkoxy-N,N-disubstituted propanamide represented by General Formula (4). The compound has both an ether group and an amide group in the molecule, and has higher solubility while maintaining high safety. In General Formula (4), R₁₀ represents a C1-18 linear or branched alkyl group, R₁₁ and R₁₂ each independently represent a hydrogen atom or a C 1-4 linear or branched alkyl group (except for a case of being simultaneously a hydrogen atom), and R₁₃ represents a hydrogen atom or a methyl group. Further, β-alkoxy-N-substituted propanamides and/or β-alkoxy-N,N-disubstituted propanamides having various structures can be listed by optionally combining the functional groups represented by R₁₀ to R₁₃. Specific examples thereof include β-methoxy-N-methylpropanamide (when R₁₀ and R₁₁ are methyl groups, and R₁₂ and R₁₃ are hydrogen atoms), β-methoxy-N,N-dimethylpropanamide (when R₁₀ to R₁₂ are methyl groups, and R₁₃ is a hydrogen atom), β-butoxy-N,N-dimethylpropanamide (when R₁₀ is a butyl group, R₁₁ and R₁₂ are methyl groups, and R₁₃ is a hydrogen atom), β-lauroxy-N,N-dimethylpropanamide (when R₁₀ is a lauryl group, R₁₁ and R₁₂ are methyl groups, and R₁₃ is a hydrogen atom), and β-stearoxy-N-ethylpropanamide (when R₁₀ is a stearyl group, R₁₁ and R₁₃ are hydrogen atoms, and R₁₂ is an ethyl group). These compounds may be used singly or in combination of two or more.

### [Chemical formula 6]

### General Formula (4)

The polarity of compound (A) can be easily adjusted to be hydrophilic, hydrophobic or amphiphilic by combining the β-alkoxy-N-substituted propanamide and/or β-alkoxy-N,N-disubstituted propanamide with substituents having different carbon numbers. Furthermore, the β-methoxy-N,N-dimethylpropanamide and the β-butoxy-N,N-dimethylpropanamide are particularly preferred because these can dissolve a wide range of substances, from highly polar substances such as water to low polar substances such as materials for resin synthesis, polyamides, fluororesins, and other hardly soluble synthetic resins, and are commonly handled as an industrial product.

The neutralized salt (B) is obtained by neutralizing an acidic compound and a basic compound. The acidic compound is an inorganic or organic acid. Examples of the inorganic acid include hydrochloric acid, nitric acid, sulfuric acid, carbonic acid, phosphoric acid, and polyphosphoric acid. Examples of the organic acid include formic acid, acetic acid, propionic acid, and lactic acid. The basic compound is an inorganic or organic base. Examples of organic bases include ammonia, compounds having one or more types of amino groups selected from primary amino groups, secondary amino groups, and tertiary amino groups in the molecule, etc. Examples of the organic base include a compound having in the molecule one or more of one type of amino group selected from a primary amino group, a secondary amino group, and a tertiary amino group, and ammonia. Furthermore, the basic compound is preferably a tertiary amine compound having one or more tertiary amino groups in the molecule. Thereby, the stability of the neutralized salt (B) and the solubility of the compound (A) can be improved. In addition, when the obtained composition (F) is used as a solvent for chemical reactions and resin synthesis, a solvent for analysis, or a diluent for dilution, the reactivity with reaction materials can be suppressed.

The substituent of the tertiary amino group of the tertiary amine compound is not particularly limited, and may be aliphatic or aromatic, may be chain or cyclic, and may or may not have, as a functional group, an unsaturated group, an ether group, an ester group, an amide group, an imide group, a carbonyl group, etc. Examples of such a tertiary amine compound include tertiary aliphatic amines such as trialkyl (1 or more carbon atoms, may be the same or different) amine, dialkyl (1 or more carbon atoms, may be the same or different) cyclohexylamine, and tricyclohexylamine; tertiary aromatic amines such as dialkyl (1 or more carbon atoms, may be the same or different) aniline, dialkyl (1 or more carbon atoms, may be the same or different) 2,4,6-trimethylaniline, N-methyldiphenylamine, and triphenylamine; and tertiary aliphatic amines having an aromatic substituent such as N,N-dimethylbenzylamine and N-methyldibenzylamine. These tertiary amine compounds for forming the neutralized salt may be used singly or in combination of two or more.

The tertiary amine compound more preferably further has, in the molecule, one or more types and or more functional groups selected from an ether group, an ester group, and an amide group. By having these functional groups, the neutralized salt (B) formed from the tertiary amine compound has higher solubility in the compound (A), and higher effects can be obtained for the stability of the composition (F) containing A and B, the storage stability and transparency of the resin synthesized in F, the transparency or dispersibility of a product obtained using F as a diluent or a dispersant, the cleanability and stripability when F is used as a cleaning agent and a stripping agent, and the high qualities of a liquid crystal alignment film obtained by treating with F and a secondary battery produced using F.

The tertiary amine compound having an ether group in the molecule is not particularly limited, and may have one or more tertiary amino groups and one or more ether groups. These ether groups may be formed in a chain structure or may be formed in a cyclic structure. Examples thereof include (methoxyethyl)diethylamine, (dimethoxymethane)dimethylamine, (ethoxyethyl)dibutylamine, (methoxyhexyl)di(2-ethylhexyl)amine, (methoxyethyl)diphenylamine, di(methoxyethyl)cyclohexylamine, and tri(butoxymethyl)amine. These may be used singly or in combination of two or more.

The tertiary amine compound having an ester group in the molecule is not particularly limited, and may have one or more tertiary amino groups and one or more ester groups. These ester groups may be formed in a chain structure or may be formed in a cyclic structure. Examples thereof include methyl 3-methoxypropionate, methyl 3-dimethylaminopropionate, butyl 3-dimethylaminopropionate, methyl 3-dibutylaminopropionate, butyl 3-dibutylaminopropionate, ethyl 4-diethylaminobutyrate, butyl 4-ethylhexylaminoacetate, isopropyl 3-morpholinopropionate, and ethyl 12-methylbenzylaminolaurate. These compounds may be used singly or in combination of two or more.

The tertiary amine compound having an amide group in the molecule is not particularly limited except for the compound having an N-substituted and/or N,N-disubstituted amide group contained in the compound (A), and may have one or more tertiary amino groups and one or more amide groups. These amide groups may be formed in a chain structure or may be formed in a cyclic structure. Examples thereof include 3-dimethylamino-N,N-dimethylpropionic acid amide, 3-dimethylamino-N,N-dibutylpropionic acid amide, 3-dibutylamino-N,N-dimethylpropionic acid amide, 3-dibutylamino-N,N-dibutylpropionic acid amide, 4-diethylamino-N,N-dimethylbutyric acid amide, 4-ethylhexylamino-N,N-diethylacetic acid amide, 3-morpholinopropionic acid morpholide, 12-methylbenzylamino-N,N-dimethyllauric acid amide, N-(3-dimethylaminopropyl)-lauric acid amide, and N-(3-dimethylaminopropyl)-stearic acid amide. These compounds may be used singly or in combination of two or more.

The tertiary amine compound having an ether group in the molecule, the tertiary amine compound having an ester group in the molecule, and the tertiary amine compound having an amide group in the molecule may be used singly or in combination of two or more selected from the group consisting thereof.

The neutralized salt (B) can be obtained by neutralizing the above-described various acidic compounds and basic compounds in any combination. In addition, B may be any one or more of a normal salt, an acidic salt, and a basic salt.

The solubility of the neutralized salt (B) in the compound (A) is preferably 0.001 g or more, more preferably 0.01 g or more, and still more preferably 0.05 g or more at room temperature. The room temperature in the present invention is in the temperature range of 10°C to 40°C. The solubility of the neutralized salt (B) in the compound (A) is g (mass) of (B) that can be dissolved in 100 g (mass) of (A).

In the composition (F) of the present embodiment, the content of the neutralized salt (B) is 0.001 to 10 % by mass with respect to the total amount of F. When B is contained in an amount of 0.001 % by mass or more in the composition, the stability of the composition (F), and the storage stability and transparency of a resin synthesized in F can be ensured. On the other hand, when the content of the neutralized salt (B) is more than 10 % by mass with respect to the total amount of the composition (F), B is less likely to be dissolved in A, the viscosity of the (F) increases, the storage stability and transparency of a resin synthesized in F may be deteriorated, and handling properties of F as a diluent, a dispersant, a cleaning agent, a stripping agent, etc., may be deteriorated, which is not preferable. From these viewpoints, the content of the neutralized salt (B) is preferably 0.01 to 8 % by mass and more preferably 0.05 to 6 % by mass with respect to the total amount of F.

As one embodiment of the present invention, the composition (F) may further include a compound (C) having one or more types and or more groups selected from an ether group, an ester group, a hydroxyl group, a urea group, an aryl group, and a sulfinyl group. Examples of the compound (C) include a compound having an ether group such as dibutyl ether, diethylene glycol monomethyl ether, diethylene glycol monoethyl ether, ethylene glycol dimethyl ether, diethylene glycol diethyl ether, dipropylene glycol dimethyl ether, 1,4-dioxane, 2-methyltetrahydrofuran, cyclopentyl methyl ether, 4-methyltetrahydropyran, and 1,3-dioxolane; a lactone-based solvent such as β-propiolactone, γ-butyrolactone, α-acetyl-γ-butyrolactone, γ-valerolactone, δ-valerolactone, and ε-caprolactone; a compound having an ester group such as butyl acetate, ethyl benzoate, 2-ethoxyethyl acetate, 2-butoxyethyl acetate, ethyl acetoacetate, isoamyl acetate, n-pentyl acetate, or ethyl propionate; a compound having a hydroxyl group such as C1-18 linear, branched, or cyclic alkanol or C2-12 alkanediol; a compound having a urea group such as 1,3-dimethylurea, 1,3-diethylurea, 1,3-diphenylurea, 1,3-dicyclohexylurea, tetramethylurea, tetraethylurea, 2-imidazolidinone, propyleneurea, 1,3-dimethyl-2 imidazolidinone, and N,N-dimethylpropyleneurea; a compound having an aryl group such as xylene, solvent naphtha, toluene, ethylbenzene, tetralin, nitrobenzene, and acetophenone; a compound having a sulfinyl group such as dimethylsulfoxide and methylethylsulfoxide; a compound having an ether group and an ester group such as diethylene glycol monoethyl ether acetate and diethylene glycol monobutyl ether acetate; and a compound having an ether group and a hydroxyl group such as C2-4 dialkylene glycol, dialkylene glycol monoalkyl ether, trialkylene glycol, trialkylene glycol monoalkyl ether, polyalkylene glycol, and polyalkylene glycol monoalkyl ether. These compounds (C) may be used singly or in combination of two or more, and are more preferably compounds having one or more types and or more functional groups selected from an ether group, an ester group, and a hydroxyl group.

The content of the compound (C) is 74.999 % by mass or less, preferably 50 % by mass or less, and more preferably 30 % by mass or less with respect to the total amount of the composition (F). When the composition (F) contains the compound (C) in an amount of 74.999 % by mass or less, the composition (F) can contain 25 % by mass or more of the compound (A), which is an essential constituent component of the composition (F), and 0.001 % by mass or more of the neutralized salt (B). This is preferable because A and B can provide the above-mentioned effects.

As an embodiment of the present invention, the composition (F) may further contain an acidic compound (D) that forms the neutralized salt (B). With the acidic compound (D), the acid value of the composition (F) is preferably 0.1 to 40 mgKOH/g, more preferably 0.2 to 10 mgKOH/g, and particularly preferably 0.2 to 5 mgKOH/g. With the acidic compound (D), the stability of the obtained composition (F), the storage stability for a long-term and transparency of the resin synthesized in F can be ensured, even when the compound (A) has a structure exhibiting strong basicity depending on the types and number of substituents.

The acidic compound (D) is an inorganic or organic acid. Examples of the inorganic acid such as hydrochloric acid, nitric acid, sulfuric acid, phosphoric acid, and polyphosphoric acid. Examples of the organic acid include monovalent acids such as formic acid, acetic acid, propionic acid, butyric acid, and lactic acid and polyvalent acids such as oxalic acid, malonic acid, succinic acid, adipic acid, maleic acid, fumaric acid, malic acid, phthalic acid, isophthalic acid, terephthalic acid, tricarballylic acid, and citric acid. These acidic compounds may be used singly or in combination of two or more.

The composition (F) of the present invention has excellent solubility, wettability, permeability, swellability, stripability, and dispersibility for various compounds, resins, etc. And composition (F) can also be suitably used as a solvent for various materials and technical fields, diluent and dispersant, solvent for chemical reactions, solvent as a mobile phase for chromatographic analysis, a solvent for extraction, a solvent for the production and dissolution of various resins, a cleaning agent for metal surfaces, equipment, resin parts, etc., in the chemical industry, a stripping agent for various resin coatings and resists, nail cosmetics, or three-dimensional objects, a liquid crystal alignment treatment agent for alignment treatment of liquid crystal molecules, a non-aqueous electrolyte for the production of secondary batteries, etc.

The amount of composition (F) required varies depending on the application and method of use, it is preferably 5% by mass or more, more preferably 10% by mass or more, and most preferably 20% by mass or more. For example, it is preferable that when used as a solvent for dissolving resins, paints, inks, etc., the content of the composition (F) in the resulting solution (or products using it) is 10 to 99 % by mass; when used as a diluent, the content of the composition (F) in the resulting diluent (product) is 20 to 95 % by mass; when used as a dispersant, the content of the composition (F) in the resulting diluent (product) is 30 to 99.9 % by mass; when used as a solvent for chemical reaction or resin synthesis, the content of the composition (F) in the resulting reaction solution (before the reaction) is 10 to 85 % by mass; when used as a solvent for analysis, the content of the composition (F) in the resulting solution (before analysis) is 50 to 99.9999 % by mass; when used as a cleaning agent, the content of the composition (F) in the resulting cleaning liquid (product) is 5 to 100 % by mass; when used as a stripping agent, the content of the composition (F) in the resulting stripping agent (product) is 5 to 100 % by mass; when used as a liquid crystal alignment treatment agent, the content of the composition (F) in the resulting treatment liquid (before treatment) is 10 to 90 % by mass; and when used as a nonaqueous electrolytic solution for producing secondary batteries, the content of the composition (F) in the resulting nonaqueous electrolytic solution (product) is 15 to 100 % by mass.

The composition (F) can be suitably used as a solvent for dissolving resins, paints, inks, adhesives, pharmaceuticals, agricultural chemicals, fragrances, pigments, dyes, cellulose derivatives, organosilicon polymers, and conductive materials. Since the composition (F) has high solubility for hardly soluble resins such as urethane resin, polyester resin, epoxy resin, polyamide resin, polyimide resin, polyamideimide resin, acrylic resin, and fluororesin, and has good affinity and adhesion to metal and nonpolar substances such as plastics, it can be used as a solvent for urethane paints or acrylic paints, and can be used as a solvent for urethane adhesives, epoxy adhesives, or fluorine-based epoxy adhesives used for bonding a plastic material with a metal material, plastic materials with each other, or metal materials with each other. Further, the composition (F), as a water-soluble organic solvent in an aqueous ink for inkjet recording or as a polar solvent in a non-aqueous ink, can keep the ink viscosity low, can improve the ejection stability of an ink, and can be suitably used as a solvent for various inks.

When the composition (F) is used as a solvent for resins, paints, inks, adhesives, pharmaceuticals, agricultural chemicals, fragrances, pigments, dyes, cellulose derivatives, organosilicon polymers, and conductive materials, it may be handled in the same manner as a general organic solvent without any particular limitation. Furthermore, a deterioration inhibitor may be appropriately added depending on the temperature, humidity, light intensity, etc., during dissolution, storage and use. In addition, an antidegradant can be appropriately selected and blended depending on the environmental temperature, humidity, illuminance of light, etc., at the time of dissolution, storage, or use. For example, in order to deal with operation under severe conditions such as thermocompression bonding of an adhesive ink, and long-term storage of paints or inks, the composition (F) is preferable to contain a heat stabilizer, a light stabilizer, an antioxidant, a preservative, and a dehydrating desiccant. When the composition (F) of the present invention is used as a solvent for clear or white inks or paints, it is more preferable to further contain a coloring inhibitor and an ultraviolet absorbing agent. The contents of these additives vary depending on varieties, working environments such as temperature and humidity, and operating conditions, these are preferably 0.0005 to 10 % by mass, more preferably 0.001 to 5 % by mass, and most preferably 0.05 to 2 % by mass. These additives may be used singly or in combination of two or more.

The composition (F) has excellent solubility for both low molecular weight organic compounds and high molecular weight polymers, and can dissolve general polymers such as acrylic polymers, polyesters, polyurethanes, and polyethers as well as engineering plastics and super engineering plastics such as polyimide precursors, polyamides, fluorine-containing polymers, and polyethersulfones. F is suitably used as a solvent in mobile phases of liquid chromatography (HPLC) and gel permeation chromatography (GPC). In both the HPLC method and the GPC method, a solution in which an analyte substance is dissolved and introduced into a column packed with a packing material, and advantaging the difference in affinity between the packing material and the analyte substance, depending on difference in molecular weight and polarity. The analyte substance is separated as well as molecular weight and molecular weight distribution are measured by a difference in elution time due to a difference in the molecular weight and structure. Note that it is necessary to replace a solvent enclosed in the column (an enclosed solvent) before measurement with a solvent used as a mobile phase for analysis (an analyzing solvent), and to enclose and store an enclosed solvent after analysis. Since the composition (F) contains the compound (A) and the neutralized salt (B), F has long-term storage stability as an enclosed solvent, and has high stability as an analyzing solvent from room temperature to high temperature (135 to 145°C) or ultra-high temperature (up to 250°C), then it can be suitably used as either an enclosed solvent for a column or a solvent for analysis by the HPLC method or the GPC method. In addition, by using the composition (F), it is possible to omit solvent substitution before and after analysis, which is preferable.

### [Examples]

Hereinafter, the present invention will be described more specifically with reference to Examples and Comparative Examples, but the present invention is not limited to these Examples. In the following description, "part", "%", and "/" are all based on mass unless otherwise specified.

Materials used in Examples and Comparative Examples are as follows. (A) Compound having an N-substituted and/or N,N-disubstituted amide group (also referred to as compound (A))
A-1: N-Butyl-2 pyrrolidone
A-2: 3-Methoxy-N,N-dimethylpropanamide ("Kohshylvent" and "KJCMPA", registered trademarks, manufactured by KJ Chemicals Corporation)
A-3: 3-Butoxy-N,N-dimethylpropanamide ("Kohshylvent", registered trademark, manufactured by KJ Chemicals Corporation)
A-4: 3-Lauroxy-N,N-dimethylpropanamide
A-5: 3-Methoxy-N,N-diethylpropanamide
A-6: 3-Ethoxy-N-phenylpropanamide
A-7: 3-Methoxy-N-cyclohexylpropanamide
A-8: 4-Acetylmorpholine
A-9: N-Formylmorpholine
A-10: N,N-Diethylbutanamide
A-11: N-Propanoylmorpholine
A-12: 4-(3-Methoxypropionyl)morpholine
A-13: N,N-Diisopropylacetamide
A-14: 3-Isopropoxy-N,N-dimethylpropanamide
A-15: N,N-Dimethylpropanamide
(B) Neutralized salt (also referred to as neutralized salt (B))
B-1: Tributylamine hydrochloride
B-2: (Methoxyethyl)diphenylamine citrate
B-3: Triethylenediamine acetate
B-4: N,N-Dimethyldimethoxymethanamine hydrochloride
B-5: 3-N,N-Dimethylpropionamide propionate
B-6: 3-Dimethylaminopropionic acid methyl sulfate
B-7: 3-Dimethylamino-N,N-dimethylpropionic acid amide hydrochloride
B-8: 3-Dibutylamino-N,N-dimethylpropionic acid amide acetate
B-9: 3-Dimethylaminopropionic acid methyl phosphate
B-10: 3-Dibutylaminopropionic acid butyl lactate
B-11: 3-Morpholinopropionic acid morpholide sulfate
(C) Compound having one or more of one or more types of groups selected from an ether group, an ester group, a hydroxyl group, a urea group, an aryl group, and a sulfinyl group (also referred to as compound (C))
C-1: 1,3-Dimethyl-2-imidazolidinone
C-2: γ-Butyrolactone
C-3: γ-Balerolactone
C-4: Dimethyl sulfoxide
C-5: Dipropylene glycol dimethyl ether
C-6: Xylene
C-7: 4-Methyltetrahydropyran
C-8: Cyclopentyl methyl ether
(D) Acidic compound (also referred to as acidic compound (D))
D-1: Sulfuric acid
D-2: Hydrogen chloride-cyclopentyl methyl ether solution (2 mol/L)
D-3: Acetic acid
D-4: Phosphoric acid
D-5: Lactic acid

### Example 1 (Synthesis and evaluation of polyimide precursor solution)

In a 500 mL beaker, 50 g of A-1 as the compound (A), 0.001 g of B-1 and 0.001 g of B-2 as the neutralized salt (B), and 29.998 g of C-1 and 20 g of C-2 as the compound (C) were added. And the mixture was stirred at room temperature (20 to 30 °C) for 30 minutes using a magnetic stirrer to obtain F-1 as the composition (F) as a colorless and transparent liquid. The acid value of F-1 was measured by the following method, and the result is shown in Table 1.

Into a 1000 mL four-necked flask equipped with a stirring rod, a thermometer, a dropping funnel, and a nitrogen gas introduction tube, 350 g of F-1 and 25.0 g (125 mmol) of 4,4'-diaminodiphenyl ether (ODA) as a diamine compound were charged. The mixture was stirred at room temperature for 30 minutes while passing nitrogen gas therethrough to obtain a colorless and transparent solution. Then, the temperature of the solution was raised to 80 °C, and 37.8 g (128 mmol) of 3,3',4,4'-biphenyltetracarboxylic acid dianhydride (BPDA) as an acid dianhydride was slowly added thereto while maintaining the temperature at 80 °C. The mixture was further continuously stirred at 80 °C for 1 hour, then cooled to room temperature, and added with 5 g of the composition F-1 thereby a colorless and transparent viscous polyimide precursor solution (varnish) with a solid content concentration of 15 % by mass was obtained. The transparency and the presence or absence of coloring of the obtained varnish were visually observed, and viscosity measurement and number average molecular weight analysis of the polyimide precursor were performed by the following methods. The results are shown in Table 1. Further, the obtained varnish was stored at 40 °C for 30 days, and then the viscosity was measured. The temporal viscosity change rate was calculated by the following formula, and the viscosity after storage and the temporal viscosity change rate are shown in Table 1. Temporal viscosity change rate (%) = (viscosity after 30 days - initial viscosity)/initial viscosity 100 %

### (Measurement of acid value)

The acid value was expressed by the amount (mg) of potassium hydroxide required for neutralizing an acidic component contained in 1 g of the composition, and was measured by an automatic potentiometric titrator in accordance with JIS K0070-1992.

### (Measurement of viscosity)

The vis×cosity of the varnish was measured at 25 °C according to JIS K5600-2-3 using a cone-plate viscometer (RE550 type viscometer manufactured by Toki Sangyo Co., Ltd.).

### (Analysis of number average molecular weight (Mn))

High performance liquid chromatography L6000 manufactured by Hitachi, Ltd. and a data analyzer ATT-8 manufactured by Hitachi, Ltd. were used; Gelpack GL-S300MDT-5 (2 columns) was used as a column; and a solvent obtained by dissolving phosphoric acid (0.06 M) and lithium bromide (0.06 M) in a mixture of DMF/THF = 1/1 (L/L) was used as a mobile phase. The measurement was performed under conditions of a sample concentration of 0.2 % and a flow rate of 1.0 ml/min, and the number average molecular weight was calculated with a calibration curve using a polystyrene standard sample.

### Preparation and evaluation of polyimide film

The obtained polyimide precursor solution (varnish) was applied onto a glass substrate, and heated at 120 °C for 10 minutes, at 250 °C for 10 minutes, and at 350 °C for 30 minutes under a nitrogen stream using a hot air drying equipment. The laminate of the polyimide film and the glass substrate was immersed in water for 10 minutes, and the polyimide film was stripped off from the glass substrate and dried at 80 °C for 10 minutes using a hot air drying equipment to obtain a colorless and transparent polyimide film having a film thickness of about 10 µm. The appearance, light transmittance, strength, elongation, and linear thermal expansion coefficient of the obtained polyimide film were evaluated by the following methods. The results are shown in Table 1.

### (Appearance of polyimide film)

The obtained polyimide film was visually observed to confirm the occurrence status of defects such as foaming and cracking and evaluate the appearance according to the following criteria.
⊚: Pale yellow, transparent, without foaming or cracking
○: Pale yellow to yellow, transparent, with slight foamings or crackings
△: Yellow or translucent, with several foams or cracks
×: Yellow to brown or opaque, with a large number of foams or crackings

### (Transparency)

The obtained polyimide film was allowed to stand overnight under conditions of a temperature of 23 °C and a relative humidity of 50 %, and then the light transmittance was measured using a haze meter (NDH-2000 manufactured by Nippon Denshoku Industries Co., Ltd.) in accordance with JIS K7105. The transparency was evaluated according to the following criteria.
⊚: The light transmittance was 90 % or more.
○: The light transmittance was 85 % or more and less than 90 %.
△: The light transmittance was 80 % or more and less than 85 %.
×: The light transmittance was less than 80%.

### (Tensile test)

The obtained polyimide film was cut into a test piece having a length of 100 mm and a width of 10 mm, allowed to stand for 24 hours under conditions of a temperature of 23 °C and a relative humidity of 50 %, and then subjected to a test using a tensile tester (Tensilon RTA-100 manufactured by Orientec Co., Ltd.) at a check interval of 50 mm, a tensile speed of 50 mm/min (n = 5). The tensile strength and the tensile elongation were evaluated according to the following criteria.

### (Tensile strength)

⊚: The tensile strength was 200 MPa or more.
○: The tensile strength was 150 MPa or more and less than 200 MPa.
△: The tensile strength was 100 MPa or more and less than 150 MPa.
×: The tensile strength was less than 100 MPa.
(Tensile elongation)
⊚: The tensile elongation was 90 % or more.
O: The tensile elongation was 60 % or more and less than 90 %.
×: The tensile elongation was less than 60 %.

### (Linear thermal expansion coefficient)

The obtained polyimide film was cut into a test piece having a length of 20 mm and a width of 2 mm, and allowed to stand overnight under conditions of a temperature of 23 °C and a relative humidity of 50 %, and then subjected to measurement under a nitrogen stream using a thermomechanical analyzer (EXSTAR6000 manufactured by SII Nanotechnology, Inc.). The measurement method was as follows: the temperature was raised from room temperature to 220 °C at a rate of 5 °C/min, then lowered it from 220 °C to room temperature. After the temperature was raised for the second time at a rate of 5 °C/min, and the average linear expansion coefficient from 50 °C to 200°C, and evaluation was performed according to the following criteria. The lower the average linear expansion coefficient, the higher the heat resistance and the dimensional stability.
⊚: The average linear expansion coefficient was less than 8 ppm/°C.
O: The average linear expansion coefficient was 8 ppm/°C or more and less than 9 ppm/°C.
△: The average linear expansion coefficient was 9 ppm/°C or more and less than 10 ppm/°C.
X: The average linear expansion coefficient was 10 ppm/°C or more.

### Preparation and evaluation of liquid crystal alignment film

The composition F-1 was further added to the obtained polyimide precursor solution to prepare a liquid crystal aligning agent having a solid content concentration of 3 % by mass. The obtained liquid crystal aligning agent was filtered through a filter having a pore size of 1.0 µm, applied onto an ITO surface of a glass substrate (length: 40 mm, width: 30 mm, thickness: 1.1 mm) with an ITO electrode having a size of 40 mm × 30 mm by a spin coating method, and subjected to heat treatment on a hot plate at 80 °C for 100 seconds and in a heat circulation type clean oven at 250 °C for 30 minutes to obtain an ITO substrate with a liquid crystal alignment film having a film thickness of 100 nm. Two ITO substrates with a liquid crystal alignment film were prepared. The liquid crystal alignment film surface of one substrate was coated with bead spacers (manufactured by JGC Catalysts and Chemicals Ltd., Shinshikyu, SW-D1) having a diameter of 4 µm, and the periphery was coated with a sealant (XN-1500T manufactured by Mitsui Chemicals, Inc.). The other substrate was bonded to the previous substrate with the surface on which the liquid crystal alignment film was formed facing inward, and then the sealing material was cured to produce an empty cell. Negative liquid crystals MLC-3023 (trade name, manufactured by Merck KGaA) were injected into the empty cell by a decompression injection method to produce a liquid crystal cell. The obtained liquid crystal cell was irradiated by a UV-LED lamp (365 nm, 500 mW/cm²) as a light source for 30 seconds while applied with a DC voltage of 15 V, thereby to obtain a vertical alignment type liquid crystal display element. The obtained liquid crystal display element was observed with a polarizing microscope to confirm whether the liquid crystals were vertically aligned, and evaluation was performed according to the following criteria.
○: No bright spots due to liquid flow or orientation defects were observed.
△: A few bright spots due to liquid flow or orientation defects were observed.
×: Bright spots due to liquid flow or orientation defects were observed.

### Examples 2 to 14 and Comparative Examples 1 to 6

In Examples 2 to 14, a polyimide precursor solution (varnish) having a solid content concentration of 15 % by mass was synthesized in the same manner as in Example 1 except for having used the diamine components, the acid dianhydride components, the compositions (F-2) to (F-14), and other components described in Tables 1 and 2 were used. Furthermore, polyimide films and liquid crystal alignment firms were produced using these precursors. The obtained varnish, film, and liquid crystal alignment film were evaluated in the same manner as in Example 1, and the results are shown in Tables 1 and 2. Further, in Comparative Examples 1 to 6, a polyimide precursor solution (varnish), preparation of a polyimide film, and preparation of a liquid crystal alignment film were performed in the same manner as in Example 1, using the diamine components, the acid dianhydride components, the compositions (H-1) to (H-6) for comparative examples, and other components are shown in Table 3. The obtained varnish, film, and liquid crystal alignment film were evaluated in the same manner as in Example 1, and the results are shown in Table 3.

**[Table 1]**

| | | | Examples | | | | | | | | | | | | | |
|---|---|---|---|---|---|---|---|---|---|---|---|---|---|---|---|---|
| | | | 1 | | 2 | | 3 | | 4 | | 5 | | 6 | | 7 | |
| Synthesis of polyimide precursor | Raw material (mole ratio) | Diamine | ODA | 1.0 | ODA | 1.0 | PDA | 1.0 | ODA | 0.5 | ODA | 1.0 | PDA | 0.7 | DACH | 1.0 |
| | | | | | | | | | DACH | 0.5 | | | DACH | 0.3 | | |
| | | Acid dianhydride | BPDA | 1.0 | BPDA | 1.0 | BPDA | 1.0 | OPDA | 1.0 | BPDA | 0.7 | PMDA | 1.0 | BPDA | 0.5 |
| | | | | | | | | | | | PMDA | 0.3 | | | OPDA | 0.5 |
| | Composition (F) (mass%) | Composition | F-1 | | F-2 | | F-3 | | F-4 | | F-5 | | F-6 | | F-7 | |
| | | Compound (A) | A-1 | 50 | A-1 | 20 | A-2 | 99.99 | A-3 | 99.80 | A-4 | 50 | A-5 | 60 | A-2 | 20 |
| | | | | | | | | | | | | | | | A-6 | 74.95 |
| | | Neutralized salt (B) | B-1 | 0.001 | B-1 | 0.1 | B-3 | 0.01 | B-4 | 0.05 | B-6 | 0.20 | B-1 | 0.10 | B-8 | 0.05 |
| | | | B-2 | 0.001 | - | - | - | - | B-5 | 0.15 | B-7 | 0.20 | B-7 | 0.40 | - | - |
| | | Compound (C) | C-1 | 29.998 | C-3 | 79.9 | - | | - | | C-1 | 49.58 | C-3 | 39.1 | C-4 | 5 |
| | | | C-2 | 20 | | | | | | | | | | | | |
| | | Acidic compound (D) | - | | - | | - | | - | | D-1 | 0.02 | D-2 | 0.40 | - | |
| | Acid value of composition (mgKOH/g) | | 0 | | 0 | | 0 | | 0 | | 0.2 | | 0.4 | | 0 | |
| | Reaction temperature (°C) | | 80 | | 40 | | 40 | | 60 | | 30 | | 45 | | 50 | |
| | Reaction time (hr) | | 1 | | 6 | | 6 | | 4 | | 18 | | 8 | | 10 | |
| Precursor solution (varnish) | Appearance | | Colorless, transparent | | Colorless, slightly | | Colorless, transparent | | Colorless, transparent | | Colorless, transparent | | Colorless, transparent | | Colorless, transparent | |
| | Molecular weight of polyimide precursor (Mn) | | 10000 | | 8000 | | 25000 | | 30000 | | 50000 | | 70000 | | 55000 | |
| | Viscosity (Pa· s) | | 1.20 | | 0.80 | | 5.20 | | 6.50 | | 12.80 | | 16.60 | | 13.20 | |
| | Viscosity after storage (Pa· s) | | 1.18 | | 0.75 | | 5.18 | | 6.46 | | 12.90 | | 16.62 | | 13.19 | |
| | Viscosity change rate (%) | | -1.67 | | -6.25 | | -0.38 | | -0.62 | | 0.78 | | 0.12 | | -0.08 | |
| Polyimide film | Appearance | | ○ | | △ | | ⊚ | | ⊚ | | ⊚ | | ⊚ | | ⊚ | |
| | Light transmittance | | ○ | | △ | | ⊚ | | ⊚ | | ⊚ | | ⊚ | | ○ | |
| | Tensile strength | | ○ | | ○ | | ⊚ | | ⊚ | | ⊚ | | ⊚ | | ⊚ | |
| | Tensile elongation | | ○ | | ○ | | ⊚ | | ⊚ | | ⊚ | | ⊚ | | ⊚ | |
| | Linear thermal expansion coefficient | | △ | | △ | | ⊚ | | ⊚ | | ⊚ | | ⊚ | | ⊚ | |
| Evaluation of liquid crystal alignment film | | | △ | | △ | | ○ | | ○ | | ○ | | ○ | | ○ | |

| | | | | | | | | | | | | | | | | |
|---|---|---|---|---|---|---|---|---|---|---|---|---|---|---|---|---|
| ODA: 4,4'-diaminodiphenyl ether PDA: p-phenylenediamine DACH: 1,4-diaminocyclohexane BPDA: 3,3',4,4'-biphenyltetracarboxylic dianhydride ODPA: 4,4'-oxydiphthalic acid anhydride PMDA: Pyromellitic dianhydride | | | | | | | | | | | | | | | | |

**[Table 2]**

| | | | Examples | | | | | | | | | | | | | |
|---|---|---|---|---|---|---|---|---|---|---|---|---|---|---|---|---|
| | | | 8 | | 9 | | 10 | | 11 | | 12 | | 13 | | 14 | |
| Synthesis of polyimide precursor | Raw material (mole ratio) | Diamine | ODA | 1.0 | PDA | 1.0 | DACH | 1.0 | ODA | 1.0 | PDA | 0.7 | DACH | 1.0 | DACH | 1.0 |
| | | | | | | | | | | | DACH | 0.3 | | | | |
| | | Acid dianhydride | PMDA | 1.0 | BPDA | 0.2 | OPDA | 1.0 | BPDA | 0.5 | PMDA | 1.0 | BPDA | 1.0 | BPDA | 1.0 |
| | | | | | OPDA | 0.8 | | | PMDA | 0.5 | | | | | | |
| | Composition (F) (mass%) | Composition | F-8 | | F-9 | | F-10 | | F-11 | | F-12 | | F-13 | | F-14 | |
| | | Compound (A) | A-7 | 20 | A-9 | 89.99 | A-11 | 30 | A-12 | 70 | A-13 | 50 | A-14 | 89 | A-15 | 80 |
| | | | A-8 | 70 | A-10 | 10 | | | | | | | | | | |
| | | Neutralized salt (B) | B-2 | 9 | B-9 | 0.004 | B-10 | 0.2 | B-3 | 0.25 | B-11 | 0.01 | B-9 | 2 | B-10 | 0.1 |
| | | Compound (C) | - | | - | | C-5 | 49 | C-8 | 29.75 | C-7 | 49.99 | C-3 | 5 | C-1 | 19.9 |
| | | | | | | | C-6 | 20 | | | | | | | | |
| | | Acidic compound (D) | D-3 | 1 | D-4 | 0.006 | D-5 | 0.8 | - | | - | | D-3 | 4 | - | |
| | Acid value of composition (mgKOH/g) | | 9.3 | | 0.1 | | 5.0 | | 0.0 | | 0.0 | | 37.4 | | 0.0 | |
| | Reaction temperature (°C) | | -15 | | 40 | | 25 | | 35 | | 0 | | 20 | | 0 | |
| | Reaction time (hr) | | 24 | | 10 | | 18 | | 16 | | 22 | | 20 | | 20 | |
| Precursor solution (varnish) | Appearance | | Colorless, transparent | | Colorless, transparent | | Colorless, transparent | | Colorless, transparent | | Colorless, transparent | | Colorless, transparent | | Colorless, transparent | |
| | Molecular weight of polyimide precursor (Mn) | | 200000 | | 15000 | | 45000 | | 22000 | | 55000 | | 150000 | | 100000 | |
| | Viscosity (Pa· s) | | 22.55 | | 1.25 | | 6.80 | | 4.85 | | 8.80 | | 18.22 | | 2.35 | |
| | Viscosity after storage (Pa· s) | | 22.45 | | 1.24 | | 6.85 | | 4.89 | | 8.9 | | 18.15 | | 2.36 | |
| | Viscosity change rate (%) | | -0.44 | | -0.80 | | 0.74 | | 0.82 | | 1.14 | | -0.38 | | 0.43 | |
| Polyimide film | Appearance | | ⊚ | | ○ | | ⊚ | | ⊚ | | ○ | | ○ | | ⊚ | |
| | Light transmittance | | ○ | | ○ | | ○ | | ○ | | ○ | | ⊚ | | ⊚ | |
| | Tensile strength | | ⊚ | | ⊚ | | ○ | | ⊚ | | ○ | | ⊚ | | ○ | |
| | Tensile elongation | | ○ | | ○ | | ○ | | ⊚ | | ○ | | ⊚ | | ⊚ | |
| | Linear thermal expansion coefficient | | ○ | | ○ | | ○ | | ⊚ | | ○ | | ⊚ | | ○ | |
| Evaluation of liquid crystal alignment film | | | ○ | | △ | | ○ | | ○ | | ○ | | ○ | | ○ | |

| | | | | | | | | | | | | | | | | |
|---|---|---|---|---|---|---|---|---|---|---|---|---|---|---|---|---|
| ODA: 4,4'-diaminodiphenyl ether PDA: p-phenylenediamine DACH: 1,4-diaminocyclohexane BPDA: 3,3',4,4'-biphenyltetracarboxylic dianhydride ODPA: 4,4'-oxydiphthalic acid anhydride PMDA: Pyromellitic dianhydride | | | | | | | | | | | | | | | | |

**[Table 3]**

| | | | Comparative Examples | | | | | | | | | | | |
|---|---|---|---|---|---|---|---|---|---|---|---|---|---|---|
| | | | 1 | | 2 | | 3 | | 4 | | 5 | | 6 | |
| Synthesis of polyimide precursor | Raw material (mole ratio) | Diamine | ODA | 1.0 | ODA | 1.0 | ODA | 1.0 | ODA | 1.0 | ODA | 1.0 | ODA | 1.0 |
| | | Acid dianhydride | BPDA | 1.0 | BPDA | 1.0 | BPDA | 1.0 | BPDA | 1.0 | BPDA | 1.0 | BPDA | 1.0 |
| | Composition (H) (mass%) | Composition | H-1 | | H-2 | | H-3 | | H-4 | | H-5 | | H-6 | |
| | | Compound (A) | - | | - | | - | | A-1 | 100 | A-5 | 5 | - | |
| | | Neutralized salt (B) | B-1 | 10 | B-1 | 3 | B-2 | 0.05 | - | | - | | B-8 | 1 |
| | | | - | | - | | - | | - | | - | | - | |
| | | Compound (C) | C-1 | 45 | C-3 | 97 | C-2 | 20 | - | | C-1 | 45 | C-2 | 99 |
| | | | C-4 | 45 | | | C-3 | 78.95 | | | C-5 | 49.9 | | |
| | | Acidic compound (D) | - | | - | | D-1 | 1 | - | | D-3 | 0.1 | - | |
| | Acid value of composition (mgKOH/g) | | 0.0 | | 0.0 | | 11.4 | | 0.0 | | 0.9 | | 0.0 | |
| | Reaction temperature (°C) | | 80 | | 60 | | 40 | | 30 | | 50 | | 45 | |
| | Reaction time (hr) | | 1 | | 5 | | 12 | | 14 | | 8 | | 10 | |
| Precursor solution (varnish) | Appearance | | Pale yellow, clouded | | Yellow, clouded | | While, clouded | | Pale yellow, transparent | | Yellow, clouded | | Pale yellow, clouded | |
| | Molecular weight of polyimide precursor (Mn) | | 5400 | | 60000 | | 120000 | | 8400 | | 46000 | | 1200 | |
| | Viscosity (Pa· s) | | 0.60 | | 38.50 | | 146.80 | | 0.68 | | 13.80 | | 0.23 | |
| | Viscosity after storage (Pa· s) | | 0.2 | | 8.8 | | 76.5 | | 1.12 | | 1.6 | | 0.15 | |
| | Viscosity change rate (%) | | -66.67 | | -77.14 | | -47.89 | | 64.71 | | -88.41 | | -34.78 | |
| Polyimide film | Appearance | | × | | × | | × | | × | | × | | × | |
| | Light transmittance | | × | | × | | × | | × | | × | | × | |
| | Tensile strength | | __{*}1 | | △ | | ○ | | __{*}1 | | × | | __{*}1 | |
| | Tensile elongation | | __{*}1 | | × | | × | | __{*}1 | | × | | __{*}1 | |
| | Linear thermal expansion coefficient | | __{*}1 | | × | | × | | __{*}1 | | × | | __{*}1 | |
| Evaluation of liquid crystal alignment film | | | × | | × | | × | | × | | × | | × | |

| | | | | | | | | | | | | | | |
|---|---|---|---|---|---|---|---|---|---|---|---|---|---|---|
| ODA: 4,4'-diaminodiphenyl ether BPDA: 3,3',4,4'-biphenyltetracarboxylic dianhydride *1: The obtained polyimide film was brittle and could not be cut into a test piece. | | | | | | | | | | | | | | |

As it was clear from the results shown in Tables 1 to 3, the composition (F) of the present invention, which contains the compound (A) and the neutralizing salt (B), was able to produce a polyimide precursor varnish with high transparency and low viscosity. Furthermore, a polyimide film obtained using the varnish has high transparency, high light transmittance, low colorability, excellent strength, elongation, heat resistance, and dimensional stability. These effects were due to the synergistic effect of the excellent solubility of the compound (A) and the stability-improving effect of the neutralized salt (B). This synergistic effect cannot be obtained by using compound (A) alone or in combination with neutralizing salt (B) and other compounds.

Further, a polyimide precursor solution (varnish) synthesized using the composition (F) as a solvent exhibits excellent stability. This effect was presumed due to the excellent solubility of the amide compound (A), the improved stability of the compound (A) by the presence of the neutralized salt (B), and the suppression of ionic repulsion and association of the polyamide acid (polyamic acid) as a polyimide precursor. Similarly, the composition (F) was suitably used as a good solvent for dissolving resins, paints, inks, adhesives, pharmaceuticals, agricultural chemicals, fragrances, pigments, dyes, cellulose derivatives, organosilicon polymers, etc., a solvent for chemical reaction, a solvent for resin synthesis, and a diluent for dilution.

A polyimide film produced using the composition (F) as a solvent exhibits excellent properties, and can be suitably used as a surface protective film or an interlayer insulating film of a semiconductor element, an insulating layer or a spacer layer of an organic EL element, a planarizing film of a thin-film transistor substrate, an insulating film of an organic transistor, a substrate as a light-receiving device such as a flexible printed substrate, a substrate for a flexible device, a substrate for a liquid crystal display, a substrate for an organic EL display, a substrate for an electronic paper, or a substrate for a thin-film solar cell, a binder for an electrode of a lithium ion secondary battery, an adhesive for a semiconductor, etc.

In addition, since the composition (F) has excellent solubility for a polyimide precursor such as polyamic acid as a main component of the liquid crystal aligning agent and a soluble polyimide, and the polyimide precursor solution synthesized or diluted in F has excellent stability, it has been confirmed that the composition (F) is suitably used to produced the liquid crystal aligning agent. Due to the need for reductions in weight reduction and thickness reduction for mobile applications such as smartphones and mobile phones, the liquid crystal aligning agent containing the composition (F) is indispensable in the production of a liquid crystal alignment film having high mechanical strength, high film hardness, and good electrical characteristics. The composition (F) can dissolve the polyimide precursor and the soluble polyimide uniformly and at a high concentration. Simultaneously, in a film forming step of preparing a coating film by applying, drying, and firing the obtained liquid crystal aligning agent on a substrate, the film thickness can be precisely controlled, and a liquid crystal alignment film excellent in electrical characteristics such as dielectric constant and electrical conductivity can be obtained.

### Example 15 (Synthesis and evaluation of urethane prepolymer solution)

Into a 1000 mL four-necked flask equipped with a stirring rod, a thermometer, a dropping funnel, and a nitrogen gas introduction tube, 107.4 g of F-15 (prepared in the same manner as described above, shown in Table 4) as a composition and 104.5 g (0.6 mol) of tolylene diisocyanate (Cosmonate T100 manufactured by Mitsui Fine Chemicals, Inc.) (TDI) as a diisocyanate compound were cherged. The mixture was stirred and dissolved at 25 °C for 1 hour, and then 0.05 g of dibutyltin dilaurate as a catalyst and 325.0 g (0.5 mol) of polytetramethylene glycol (PTMG 650 manufactured by Mitsubishi Chemical Corporation) (PTMG) were charged therein. The mixture was heated to 60 °C while passing nitrogen gas therethrough, and then stirred for 4 hours to obtain a light yellow and transparent isocyanate-terminated urethane prepolymer solution having a solid content concentration of 80 % by mass. The obtained urethane prepolymer solution was subjected to viscosity measurement and number average molecular weight analysis using the following methods, and the results are shown in Table 4. The obtained urethane prepolymer solution was filtered through a 100 mesh nylon mesh, the residue was measured, and the gel fraction was calculated by the following formula. After storage at 40 °C for 30 days, the viscosity was measured to evaluate the stability. Gel fraction (%) = (residue weight (g))/(diisocyanate weight (g) + diol weight (g)) × 100 %

### (Measurement of viscosity)

The viscosity of the varnish was measured at 25 °C according to JIS K5600-2-3 using a cone-plate viscometer (RE550 type viscometer manufactured by Toki Sangyo Co., Ltd.).

### (Number average molecular weight)

High performance liquid chromatography L6000 manufactured by Hitachi, Ltd. and a data analyzer ATT-8 manufactured by Hitachi, Ltd. were used; Gelpack GL-S300MDT-5 (2 columns) was used as a column; and a solvent obtained by dissolving phosphoric acid (0.06 M) and lithium bromide (0.06 M) in a mixture of DMF/THF = 1/1 (L/L) was used as a mobile phase. The measurement was performed under conditions of a sample concentration of 0.2 % and a flow rate of 1.0 ml/min, and the number average molecular weight was calculated with a calibration curve using a polystyrene standard sample.

### (Stability)

The urethane prepolymer solution was stored at 40 °C for 30 days, and then subjected to viscosity measurement. From the viscosity change rate over time according to the following formula, the stability was evaluated according to the following criteria. Viscosity change rate over time (%) = (viscosity after 30 days - initial viscosity)/initial viscosity × 100 %
⊚: The viscosity change rate was less than 2 %.
O: The viscosity change rate was 2 % or more and less than 5 %.
X: The viscosity change rate was 5 % or more.

### Preparation and evaluation of polyurethane film

To 88.9 g of the obtained urethane prepolymer solution, 11.1 g of triol type polypropylene glycol (NOF Corporation, number average molecular weight: 1000, Uniol TG-1000R) was added. The mixture was stirred at 25 °C for 5 minutes, and then applied onto a stripping surface of a heavy stripping PET film (polyester film E7001 manufactured by Toyobo Co., Ltd.) having a thickness of 75 µm to have a thickness of 100 µm. The urethane was dry-curing at 130 °C for 30 minutes under a nitrogen stream using a hot air dryer, and then the coating film was stripped from the heavy stripping PET film to obtain a polyurethane film. The appearance and 100 % modulus of the obtained polyurethane film were evaluated by the following methods, and the results are shown in Table 4.

### (Appearance of polyurethane film)

The obtained polyurethane film was visually observed to confirm the occurrence status of defects such as foaming and cracking and evaluate the appearance according to the following criteria.
⊚: Colorless and transparent, without gel-like substances or precipitates.
O: Pale yellow and transparent, without gel-like substances or precipitates.
△: Yellow or translucent, with gel-like substances or precipitates slightly observed.
X: Yellow to brown or translucent, with a large number of gel-like substances or precipitates.

### (Tack resistance)

The obtained polyurethane film was allowed to stand under conditions of a temperature of 23 °C and a relative humidity of 50 % for 24 hours, then a PET film having a thickness of 100 µm ("Cosmoshine A-4100 " manufactured by Toyobo Co., Ltd.) was placed on the coating film so that an easy-adhesion treated surface is in contact with the polyurethane film. The product was allowed to stand in an atmosphere of 40 °C for 3 days while a standard weight having a load of 1 kg was placed thereon, and then cut into a width of 10 mm and a length of 50 mm. Thereafter, the PET film was stripped off at a rate of 50 mm/min in a direction of 90° using a tensile tester (Tensilon RTA-100 manufactured by Orientec Co., Ltd.) under conditions of a temperature of 23 °C and a relative humidity of 50 % to measure the adhesive strength, and evaluation was performed according to the following criteria.
O: The adhesive strength was less than 0.1 MPa, without tack.
△: The adhesive strength was less than 0.5 MPa and 0.1 MPa or more, with slight tack.
×: The adhesive strength was 0.5 MPa or more, with tack.

### (100 % modulus)

The obtained polyurethane film was cut into a test piece having a length of 100 mm and a width of 10 mm, allowed to stand for 24 hours under conditions of a temperature of 23 °C and a relative humidity of 50 %, and then subjected to a test using a tensile tester (Tensilon RTA-100 manufactured by Orientec Co., Ltd.) at a check interval of 50 mm, a tensile speed of 50 mm/min (n = 5). The stress at the time when the test piece was 100 % elongated, 100 % modulus, was measured. One having a 100 % modulus of less than 5 MPa was excellent in flexibility, and evaluation was performed according to the following criteria.
O: The 100 % modulus was less than 5 MPa.
△: The 100 % modulus was 5 MPa or more and less than 10 MPa.
×: The 100 % modulus was 10 MPa or more.

### (Preparation of polyurethane coating film)

The obtained urethane prepolymer solution was mixed with triol type polypropylene glycol. The mixture was applied onto an aluminum substrate of 10 cm × 10 cm × 2 mm so as to have a thickness of 100 µm, and subjected to urethanization reaction and drying at 130 °C for 30 minutes under a nitrogen stream using a hot air dryer to prepare a urethane coating film.

### (Adhesion of polyurethane coating film)

The resulting polyurethane coating was cut to prepare a test piece having a length of 100 mm and a width of 10 mm. The test piece was allowed to stand for 24 hours under conditions of a temperature of 23 °C and a relative humidity of 50 %, and then subjected to a stripping test at 180°, a tensile speed of 100 mm/min (n = 5) using a tensile tester (Tensilon RTA-100 manufactured by Orientec Co., Ltd.). The stripping strength was evaluated according to the following criteria.
⊚: The strip strength was 20 N/10 mm or more and cohesive failure.
O: The strip strength was 20 N/10 mm or more and there was interfacial peeling.
△: The strip strength was 10 N/10 mm or more and less than 20 N/10 mm and there was interfacial stripping.
×: The strip strength was less than 10 N/10 mm and there was interfacial stripping .

### (Stripability of polyurethane coating film)

The obtained polyurethane coating film was cut at every 10 mm width to form a 100 square grid pattern. Using the composition (F-14) as a stripping agent, the polyurethane coating film was immersed together with the aluminum substrate in the stripping agent at 40 °C for 60 minutes, and then water (25 °C) was poured to remove the polyurethane coating film together with the stripping agent from the surface of the substrate. When the urethane coating film remained, the stripping by immersion in the stripping agent and pouring with water was repeated until the urethane coating film stripped off in 100 squares. The stripability of the composition (F-14) was evaluated based on the number of repetitions according to the following criteria.
⊚: The immersion in the stripping agent was repeated once.
○: The immersion in the stripping agent was repeated twice.
△: The immersion in the stripping agent was repeated three to five times.
X: The immersion in the stripping agent was repeated six or more times.

### (Evaluation of cleanability)

The obtained polyurethane coating film was immersed together with the aluminum substrate in xylene at 60 °C for 120 minutes, and then the urethane coating film was stripped off with a metal spatula. Thereafter, the residue of the urethane coating film remaining on the aluminum substrate was repeatedly wiped five times with a waste containing a cleaning agent using the composition (F-14) as the cleaning agent.

Then, the state of the residue of the urethane coating film was visually confirmed, and the cleanability of the composition (F-14) was evaluated according to the following criteria.
○: Residue after stripping of the urethane coating film was not observed.
△: Residue after stripping of the urethane coating film was slightly observed.
×: A large amount of residue after stripping of the urethane coating film was observed.

### Examples 16 to 18 and Comparative Examples 7 to 9

In Examples 16 to 18, a urethane prepolymer solution having a solid content concentration is shown in Table 4 was synthesized in the same manner as in Example 15, except that the diisocyanates, the diols, and compositions (F-16) to (F-18) are shown in Table 4 were used. Therefore, a polyurethane film and a polyurethane coating film having a composition is shown in Table 4 were produced in the same manner as in Example 15, and were evaluated in the same manner as in Example 15. The results are shown in Table 4. In Comparative Examples 7 to 9, a urethane prepolymer solution having a solid content concentration is shown in Table 4 was synthesized in the same manner as in Example 14, using the diisocyanates, the diols, and compositions (H-7) to (H-9) for Comparative Examples are shown in Table 4. Therefore, a polyurethane film and a polyurethane coating film having a composition are shown in Table 4 were produced, and were evaluated in the same manner as in Example 14. The results are shown in Table 4.

**[Table 4]**

| | | | Examples | | | | | | | | Comparative Examples | | | | | |
|---|---|---|---|---|---|---|---|---|---|---|---|---|---|---|---|---|
| | | | 15 | | 16 | | 17 | | 18 | | 7 | | 8 | | 9 | |
| Synthesis of urethane prepolymer | Raw material (mole ratio) | Diisocyanate | TDI | 6.0 | TDI | 6.0 | MDI | 3.0 | IPDI | 4.0 | TDI | 6.0 | MDI | 3.0 | IPDI | 4.0 |
| | | Diol | PTMG | 5.0 | PTMG | 5.0 | PC | 2.0 | PC | 3.0 | PTMG | 5.0 | PC | 2.0 | PC | 3.0 |
| | Com position (F) or Com position (H) (mass%) | Composition | F-15 | | F-16 | | F-17 | | F-18 | | H-7 | | H-8 | | H-9 | |
| | | Compound (A) | A-2 | 99.8 | A-11 | 20 | A-3 | 80 | A-15 | 50 | - | | A-1 | 100 | - | |
| | | Neutralized salt (B) | B-10 | 0.2 | B-4 | 9 | B-5 | 0.005 | B-1 | 1 | - | | - | | B-1 | 1 |
| | | Compound (C) | - | | C-7 | 68 | C-5 | 19.975 | C-1 | 49 | C-1 | 50 | - | | C-2 | 20 |
| | | | | | | | | | | | C-5 | 47 | | | C-3 | 79 |
| | | Acidic compound (D) | - | | D-5 | 3 | D-3 | 0.020 | - | | D-5 | 3 | - | | - | |
| | Acid value of composition (mgKOH/g) | | 0.0 | | 18.7 | | 0.2 | | 0.0 | | 18.7 | | 0.0 | | 0.0 | |
| | Concentration of urethane prepolymer solution (wt%) | | 80 | | 80 | | 70 | | 80 | | 80 | | 70 | | 80 | |
| | Reaction temperature (°C) | | 60 | | 80 | | 80 | | 80 | | 60 | | 80 | | 80 | |
| | Reaction time (hr) | | 4 | | 2 | | 2 | | 3 | | 4 | | 2 | | 3 | |
| Urethane prepolymer solution | Appearance | | Pale yellow, transparent | | Pale yellow, transparent | | Pale yellow, transparent | | Colorless, transparent | | Yellow, slightly | | Yellow, gelated | | Colorless, slightly | |
| | Molecular weight of polyurethane prepolymer (Mn) | | 8400 | | 9200 | | 9500 | | 4500 | | 7600 | | _^{*2} | | 4000 | |
| | Viscosity (Pa· s) | | 3.2 | | 15.2 | | 15.2 | | 8.2 | | 42.3 | | _^{*2} | | 12.5 | |
| | Gel fraction (%) | | 0.10 | | 0.50 | | 0.20 | | 0.05 | | 6.80 | | _^{*2} | | 1.20 | |
| | Stability | | ○ | | ○ | | ⊚ | | ○ | | × | | _^{*2} | | × | |
| Urethanization | Urethane prepolymer solution (mass%) | | 88.9 | | 88.9 | | 82.5 | | 81.0 | | 88.9 | | _^{*2} | | 81.0 | |
| | Added polyol (mass%) | | PPG-T | 11.9 | PPG-T | 11.9 | PPG-T | 17.5 | PPG-T | 19.0 | PPG-T | 11.9 | _^{*2} | | PPG-T | 19.0 |
| Urethane film | Appearance | | ○ | | △ | | ⊚ | | ○ | | × | | _^{*2} | | △ | |
| | Tack resistance | | ○ | | ○ | | ○ | | ○ | | × | | _^{*2} | | △ | |
| | 100% Modulus | | ○ | | ○ | | ○ | | ○ | | △ | | _^{*2} | | × | |
| Urethane coating film | Adhesion | | ○ | | △ | | ⊚ | | ○ | | × | | _^{*2} | | △ | |
| | Peeling agent, cleaning agent | | F-14 | | F-15 | | F-15 | | F-16 | | H-7 | | _^{*2} | | H-9 | |
| | Peelability | | ⊚ | | ○ | | ⊚ | | ○ | | △ | | _^{*2} | | × | |
| | Cleanability | | ○ | | △ | | ⊚ | | ○ | | × | | _^{*2} | | × | |

| | | | | | | | | | | | | | | | | |
|---|---|---|---|---|---|---|---|---|---|---|---|---|---|---|---|---|
| TDI: Tolylene diisocyanate (Cosmonate T100 manufactured by Mitsui Fine Chemicals, Inc.) MDI: Diphenylmethane diisocyanate IPDI: Isophorone diisocyanate PTMG: Polytetramethylene glycol (manufactured by Mitsubishi Chemical Corporation, number average molecular weight: 650, PTMG650) PC: Polycarbonate diol (Kuraray Co., Ltd., number average molecular weight: 1000, Kuraray Polyol C-1010) PPF-T: Triol type polypropylene glycol (NOF Corporation, number average molecular weight: 1500, Uniol TF-1000R) '2: The obtained urethane prepolymer solution was gelated and could not be subjected to measurements and coating film formation. | | | | | | | | | | | | | | | | |

As it was clear from the results shown in Table 4, the composition (F) contains the compound (A) and the neutralized salt (B), thus the urethanization reaction can be well controlled, and a urethane prepolymer solution can be obtained that has high transparency, low viscosity, a low gel fraction, and excellent stability. Furthermore, a uniform and transparent polyurethane film or polyurethane coating film can be obtained from the urethane prepolymer solution. These effects were due to the synergistic effect of the excellent solubility of the compound (A) and the stability-improving effect of the neutralized salt (B). The compound (A) alone caused gelation of the urethane prepolymer, and a combination of the neutralized salt (B) and the compound (C) caused increases in viscosity and gel fraction. Further, when a polyurethane films or a polyurethane coating films were produced with such compositoins, defects due to gelated products and precipitates were likely to occur, and a coating film with good strength and elocation could be obtained.

The urethane prepolymer produced using composition (F) as a solvent had a low gel fraction and excellent stability, and could be made into good-molded products such as polyurethane films and polyurethane coating films. In addition, since urethane prepolymers have low viscosity and good handling characteristics, these can be mixed uniformly and quickly with high molecular weight polyols, polyamines, etc., and when heated these can be converted into urethane to produce molded products with excellent properties. Furthermore, when composition (F) was used as a stripping agent or cleaning agent, the resulting polyurethane coating film has good removability and could completely remove residues on the substrate, so it exhibits good stripping properties as a stripping agent and good cleaning properties as a cleaning agent. This effect is estimated to be because the hydrogen bonds contained in the polyurethane film or polyurethane coating were broken by the compound (A) having excellent solubility and the neutralization salt (B), allowing the composition (F) to easily permeate into the interface between the polyurethane film or polyurethane coating and the substrate. Similarly, the composition (F) can be suitably used as a solvent for dissolution, as a solvent for reaction, as a solvent for resin synthesis, as a diluent for dilution, as a dispersant for dispersion, as a stripping agent for stripping, and as a cleaning agent for cleaning, for, for example, dissolving, diluting, dispersing, stripping, and cleaning sealing materials for construction and civil engineering, adhesives such as an elastic adhesive for construction, gum tapes, surface protective films, various pressure-sensitive adhesives represented by those for optical uses, paints, elastomers, coating film waterproofing materials, floor materials, plasticizers, soft polyurethane foams, semi-hard polyurethane foams, hard polyurethane foams, artificial leathers, etc.

### Example 19 (Preparation and evaluation of etching solution)

An etching solution was prepared by adding 100 g of a composition (F-19) to 100 g of an aqueous solution of 0.079 M iodine and 0.60 M potassium iodide. Next, 22 × 26 mm gold deposited glass (gold film thickness: 30 nm, manufactured by KENIS Limited) was coated with a 25 µm dry film resist. Thereafter, it was exposed to lightusing a glass mask with a line/space (L/S) = 36 µm/24 µm, and the unexposed portions were removed by development to prepare an etching resist pattern with L/S = 36 µm/24 µm. After, the substrate was immersed in an etching solution at a temperature of 30 °C, for a period of time shown in Table 5 to perform etching. After the etching, the etching resist was removed by immersion in a 3 % by mass aqueous solution of sodium hydroxide at 50 °C for 60 seconds, and the gold-deposited glass was washed with ultrapure water and dried with nitrogen gas. The surface smoothness and side etching amount of the gold-deposited glass were observed using a scanning electron microscope (SEM) (SU8200 series manufactured by Hitachi High-Technologies Corporation), and the etching properties were evaluated using the following method. The results are shown in Table 5.

### (Surface smoothing)

⊚: A smooth surface was observed in the SEM image.
O: A slightly rough surface was observed in a small portioin of the SEM image.
△: An entire surface was observed as a slightly rough surface in the SEM image.
×: A rough surface was observed in the SEM image.

### (Side etching property)

⊚: The side etching amount was less than 200 nm.
O: The side etching amount was 200 nm or more and less than 400 nm.
△: The side etching amount was 400 nm or more and less than 600 nm.
×: The side etching amount was 600 nm or more.

**[Table 5]**

| | | Examples | | | | | | | | Comparative Examples | | | |
|---|---|---|---|---|---|---|---|---|---|---|---|---|---|
| | | 19 | | 20 | | 21 | | 22 | | 10 | | 11 | |
| Composition (F) or Composition (H) (mass%) | Composition | F-19 | | F-20 | | F-21 | | F-22 | | H-10 | | H-11 | |
| | Compound (A) | A-2 | 80 | A-3 | 50 | A-1 | 98 | A-15 | 50 | A-1 | 100 | - | |
| | Neutralized salt (B) | B-3 | 0.01 | B-1 | 1 | B-1 | 2 | B-3 | 0.1 | - | | B-3 | 0.1 |
| | Compound (C) | C-5 | 19.97 | C-8 | 49.0 | - | | C-8 | 49.8 | - | | C-6 | 99.8 |
| | Acidic compound (D) | D-3 | 0.02 | - | | - | | D-4 | 0.1 | - | | D-3 | 0.1 |
| Acid value of composition (mgKOH/g) | | 0.2 | | 0.0 | | 0.0 | | 0.9 | | 0.0 | | 0.2 | |
| Metal species of foil film | | Gold | | Gold | | Gold | | Copper | | Gold | | Copper | |
| Etching time (sec) | | 30 | | 30 | | 30 | | 180 | | 30 | | 30 | |
| Surface smoothing ability | | ⊚ | | ○ | | ○ | | ⊚ | | △ | | × | |
| Side etching property | | ⊚ | | ⊚ | | ○ | | ○ | | × | | × | |

### Examples 20 to 22 and Comparative Examples 10 and 11

In Examples 20 to 22, etching was performed in the same manner as in Example 19 using compositions (F-20) to (F-22) shown in Table 5, and the etching properties were evaluated. In addition, in Example 22, the metal type of the thin film was changed from gold-deposited glass to a copper-clad laminate substrate (copper foil: 35 µm, manufactured by Sunhayato Corp.). The results are shown in Table 5. In Comparative Examples 10 and 11, etching was performed in the same manner as in Example 19 using compositions (H-10) and (H-11) shown in Table 5, and the etching properties were evaluated. In addition, in Example 19, the metal type of the thin film was changed from gold-deposited glass to a copper-clad laminate substrate (copper foil: 35 µm, manufactured by Sunhayato Corp.). The results are shown in Table 5.

The metal etching solution using composition (F) as the organic solvent had excellent wettability and good smoothness because it contained the highly hydrophilic amide compound (A). In addition, the neutralized salt (B) has excellent salt stability, so the iodine salt was stable and the volatilization of iodine was suppressed. In addition, the neutralized salt B, combined with the high hydrophilicity and high solubility of A, is also highly effective in suppressing the amount of side etching. Similarly, composition (F) can be suitably used as an etching solution (stripping agent) for various metals used in etching integrated circuits and printed circuit boards.

Example 23 (Evaluation as a dispersant for cellulose nanofiber) 50 g of a cellulose nanofiber dispersion liquid (Rheocrista I-2SX manufactured by DKS Co., Ltd.) was dried at 105 °C using a blower dryer. Subsequently, 199 g of composition (F-23) was added and stirred for 60 minutes using a TK homomixer (6,000 rpm) to obtain an organic solvent dispersion of cellulose nanofibers (CNF dispersion, solid content 0.5 % by mass). Thereafter, it was stored at 40 °C for one week, and the dispersion state was observed. The dispersion stability was evaluated according to the following criteria, and the results are shown in Table 6.
O: A uniform dispersion state was maintained.
△: A small amount of agglomerates was observed.
×: Agglomerates and precipitates were observed.

### Examples 24 to 26 and Comparative Examples 12 and 13

In Examples 24 to 26, a CNF dispersions having the concentration is shown in Table 6 were prepared in the same manner in example 23, except that compositions (F-24) to (F-26) are shown in Table 5 were used. The dispersion stability of the dispersions thus obtained was evaluated. The results are shown in Table 6. In Comparative Examples 12 and 13, a CNF dispersions having the concentration is shown in Table 6 were prepared in the same manner as in example 23, and then the dispersion stability was evaluated. The results are shown in Table 6.

**[Table 6]**

| | | Examples | | | | | | | | Comparative Examples | | | |
|---|---|---|---|---|---|---|---|---|---|---|---|---|---|
| | | 23 | | 24 | | 25 | | 26 | | 12 | | 13 | |
| Composition (F) or Composition (H) (mass%) | Composition | F-23 | | F-24 | | F-25 | | F-26 | | H-12 | | H-13 | |
| | Compound (A) | A-2 | 99.99 | A-3 | 50 | A-1 | 99.4 | A-15 | 75 | A-13 | 100 | - | |
| | Neutralized salt (B) | B-7 | 0.01 | B-8 | 0.05 | B-1 | 0.2 | B-3 | 0.1 | - | | B-3 | 0.1 |
| | Compound (C) | - | | C-3 | 49.95 | - | | C-8 | 24.88 | - | | C-5 | 99.88 |
| | Acidic compound (D) | - | | - | | D-2 | 0.4 | D-3 | 0.02 | - | | D-3 | 0.02 |
| Acid value of composition (mgKOH/g) | | 0.0 | | 0.0 | | 0.4 | | 0.2 | | 0.0 | | 0.2 | |
| Concentration of CNF dispersion (wt%) | | 0.5 | | 0.8 | | 0.4 | | 1.0 | | 0.5 | | 1.0 | |
| Dispersion stability | | ○ | | ○ | | ○ | | ○ | | △ | | × | |

### Example 27 (Evaluation as pigment dispersant)

180 g of composition (F-27) was placed in a 500 mL beaker, and while stirring at 300 rpm using a homomixer, 20 g of hydrophilic silica fine particles (specific surface area by BET method: 175-225 m²/g, trade name: Aerosil 200, manufactured by Nippon Aerosil Co., Ltd.)) was gradually added to obtain a mixed liquid. Then, the rotation speed of the homomixer was increased to 1,500 rpm, and the mixture was stirred at 1,500 rpm for 60 minutes to produce a silica dispersion.

### Example 28

100 g of alumina (AL-160SG-4, manufactured by Showa Denko K.K.), 1 g of a commercially available dispersant (T-AX ammonium salt, manufactured by Toagosei Co., Ltd.), and 29 g of ion-exchanged water were added to a 500 mL beaker and stirred at 4,000 rpm for 5 minutes using a homomixer to wet-grind the alumina. Then, 70 g of composition (F-28) was added and stirred for 5 minutes at a rotation speed of 500 rpm using a homomixer to produce an alumina dispersion with a pigment concentration of 50 % by mass.

### (Measurement of viscosity)

The viscosity of the varnish was measured at 25 °C according to JIS K5600-2-3 using a cone-plate viscometer (RE550 type viscometer manufactured by Toki Sangyo Co., Ltd.). The results are shown in Table 7.

### (Dispersion stability)

The silica dispersion was stored at 40 °C for 7 days, and then subjected to viscosity measurement. The dispersion stability was evaluated according to the following criteria, based on the rate of viscosity change over time calculated using the following formula. The results are shown in Table 7. Rate of viscosity change over time (%) = (viscosity after 7 days - initial viscosity) / initial viscosity × 100 %
O: The viscosity change rate was less than 5 %.
△: The viscosity change rate was 5 % or more and less than 10 %.
×: The viscosity change rate was 10 % or more.

### Examples 29 and 30 and Comparative Examples 14 to 16

In Example 29, a dispersion of silica, as described in Table 7, was prepared in the same manner as in Example 27, except that the composition (F-29) described in Table 7 was used. In addition, in Example 30, a dispersion of silica, alumina, etc., as described in Table 7, was prepared in the same manner as in Example 28, except that the composition (F-30) described in Table 7 was used. Furthermore, the viscosity and dispersion stability of the dispersion obtained in the same manner as in Example 27 were evaluated. The results are shown in Table 7. In Comparative Examples 14 and 15, a dispersion of silica, was prepared in the same manner as in Example 27. In Comparative Example 16, a dispersion of alumina, was prepared in the same manner as in Example 28. The viscosity and dispersion stability of the obtained dispersion were evaluated. The results are shown in Table 7.

**[Table 7]**

| | | Examples | | | | | | | | Comparative Examples | | | | | |
|---|---|---|---|---|---|---|---|---|---|---|---|---|---|---|---|
| | | 27 | | 28 | | 29 | | 30 | | 14 | | 15 | | 16 | |
| Composition (F) or Composition (H) (mass%) | Composition | F-27 | | F-28 | | F-29 | | F-30 | | H-14 | | H-15 | | H-16 | |
| | Compound (A) | A-11 | 99.999 | A-2 | 40 | A-15 | 78 | A-14 | 79 | - | | - | | - | - |
| | Neutralized salt (B) | B-7 | 0.001 | B-8 | 0.1 | B-1 | 1 | B-1 | 1 | B-7 | 0.001 | B-1 | 1 | B-1 | 0.1 |
| | Compound (C) | - | | C-8 | 59.9 | C-5 | 20 | C-3 | 19.95 | C-2 | 99.999 | C-5 | 98 | C-8 | 99.9 |
| | Acidic compound (D) | - | | - | | D-4 | 1 | D-3 | 0.05 | - | | D-4 | 1 | - | |
| Acid value of composition (mgKOH/g) | | 0.0 | | 0.0 | | 1.1 | | 0.5 | | 0.0 | | 1.1 | | 0.0 | |
| Pigment | | Silica | | Alumina | | Silica | | Alumina | | Silica | | Silica | | Alumina | |
| Pigment concentration (wt%) | | 20 | | 50 | | 10 | | 50 | | 20 | | 10 | | 50 | |
| Commercially available dispersant | Added amount (relative to pigment wt%) | - | | T-AX | 1 | - | | T-AX | 1 | - | | - | | T-AX | 1 |
| Viscosity (mPa· s) | | 130 | | 95 | | 25 | | 48 | | 2,100 | | 12,000 | | 450 | |
| Dispersion stability | | ○ | | △ | | ○ | | ○ | | × | | △ | | × | |

As was clear from the results of Tables 6 and 7, when the composition (F) containing the compound (A) and the neutralizing salt (B) was used as a dispersant, good dispersibility was exhibited. This was because, in addition to the excellent dispersibility of the compound (A), the strong hydrogen bonds formed between the cellulose nanofibers or between the fine particles of silica, alumina, etc., are partially cleavage by the compound (A) and the neutralizing salt (B). As a result, the dispersion obtained by dispersing with the composition (F) had good and stable dispersibility compared to a composition containing only the compound (A) or a composition containing the neutralizing salt (B) and the compound (C). Such dispersion characteristics can be exhibited not only in cellulose nanofiber dispersions and pigment dispersions such as silica fine particles, but also in synthetic resins, paints, inks, adhesives, pharmaceuticals, pesticides, fragrances, pigments, dyes, organic silicon polymers, conductive materials, and carbon materials such as carbon nanomaterials. Therefore, the composition (F) can be suitably used as a dispersant for dispersing these materials.

### Example 31 (Evaluation as a mobile phase for GPC measurements)

The composition (F-31) was used as the mobile phase, and a high-performance liquid chromatograph L6000 manufactured by Hitachi and a data analyzer ATT-8 manufactured by Hitachi were used, equipped with Gelpack GL-S300MDT-5 (2 columns) as columns, to perform molecular weight analysis of polyamide 66 (Toray Industries, Amilan CM3001N). The polyamide 66 was dissolved in composition (F-31) to prepare a sample with a concentration of 0.01 wt%. The column temperature was set to 40 °C, and molecular weight measurements were performed at a flow rate of 1.0 ml/min using F-31 as the mobile phase, and the number average molecular weight was calculated using the calibration curve of a polystyrene standard sample. In addition, the performance of the composition as a solvent for molecular weight analysis was also evaluated according to the following criteria, and the results are shown in Table 8.
O: Detection was possible with a detector (differential refractive index or ultraviolet absorbance), and no increase in column pressure was observed.
△: Detection was possible with the detector, but an increase in column pressure was observed.
×: Detection was not possible with the detector, and measurement was not possible.

### Examples 32 to 34 and Comparative Examples 17 to 20

In Examples 32-34, compositions (F-32) to (F-34) were used as the mobile phase, and in Comparative Examples 17-20, compositions (H-17) to (H-20) were used as the mobile phase. Also, using the same equipment and measurement method as in Example 31, the polyvinylidene fluoride and polyamideimide shown in Table 8, and the polyimide precursor polymer synthesized in Example 1 were analyzed for molecular weight, and the performance as a solvent for molecular weight analysis were evaluated. The results are shown in Table 8.

**[Table 8]**

| | | Examples | | | | | | | | Comparative Example | | | | | | | |
|---|---|---|---|---|---|---|---|---|---|---|---|---|---|---|---|---|---|
| | | 31 | | 32 | | 33 | | 34 | | 17 | | 18 | | 19 | | 20 | |
| Composition (F) or Composition (H) (mass%) | Composition | F-31 | | F-32 | | F-33 | | F-34 | | H-17 | | H-18 | | H-19 | | H-20 | |
| | Compound(A) | A-2 | 89.8 | A-3 | 75 | A-12 | 99.5 | A-15 | 50 | A-1 | 89.9 | - | | - | | A-15 | 100 |
| | Neutralized salt (B) | B-9 | 0.1 | B-7 | 0.1 | B-1 | 0.5 | B-8 | 0.5 | - | | B-9 | 0.1 | B-9 | 0.5 | - | |
| | Compound (C) | C-2 | 10 | C-5 | 24.9 | - | | C-7 | 49.5 | C-2 | 10 | C-5 | 99.9 | C-4 | 99.5 | - | |
| | Acidic compound (D) | D-4 | 0.1 | - | | - | | - | | D-4 | 0.1 | - | | - | | - | |
| Acid value of composition | | 1.7 | | 0.0 | | 0.0 | | 0.0 | | 1.7 | | 0.0 | | 0.0 | | 0.0 | |
| GPC analysis | Sample | Polyamide 66 | | Polyvinylidene fluoride | | Polyamideimide | | Polyimide precursor (Example 1) | | Polyamide 66 | | Polyvinylidene fluoride | | Polyamideimide | | Polyimide precursor (Example 1) | |
| | Number average molecular weight | 45,000 | | 110,000 | | 56,000 | | 10,000 | | 67,000 | | - | | - | | 25,000 | |
| | Pressure rise of column | ○ | | ○ | | ○ | | ○ | | △ | | × | | × | | △ | |

As was clear from the results shown in Table 8, when the composition (F) containing the compound (A) and the neutralizing salt (B) was used as a mobile phase for liquid chromatography, it showed good solubility and stability. This was because the compound (A) has excellent dispersibility, and the neutralizing salt (B) ensures the long-term storage stability and heat resistance (thermal stability) of A. As a result, the molecular weight analysis of poorly soluble and difficult to analyze synthetic resins could be performed stably and accurately by using the composition (F) compared to a composition containing only A or a composition containing only compound (C) and B. In addition, when the neutralizing salt (B) was used but the compound (A) was not used, it is difficult to measure the poorly soluble resin. This is because in such cases, even if the measurement is possible, the molecular weight cannot be measured stably due to an increase in the apparent molecular weight or an increase in column pressure. From these results, composition (F) can be suitably used as a solvent for measurements and analyses that require dissolving a sample, such as not only LC (liquid chromatography) and GPC (gel permeation chromatography) analyses, but also viscosity measurements, dynamic viscoelasticity measurements, measurements of absolute molecular weights using a MALS detector, NMR measurements, etc.

### Example 35 (Evaluation as nonaqueous electrolytic solution)

### Preparation of nonaqueous electrolytic solution

Lithiumbis(fluorosulfonyl)imide (LiSFI) as an electrolyte was dissolved in the composition (F-35) shown in Table 9 at a concentration of 1 mol/L to prepare a nonaqueous electrolytic solution.

### Preparation of electrode sheet

Preparation of electrode sheet 90 g of lithium cobalt oxide as a positive electrode active material, 5 g of acetylene black as a conductive additive, and 5 g of polyvinylidene fluoride (KYNAR761, manufactured by Arkema) as a binder were added to 20 g of composition (F-35) and mixed uniformly to prepare a paste-like positive electrode active material composition. This paste-like positive electrode active material composition was applied to one side of an aluminum foil (positive electrode current collector: thickness 20 µm) and dried to obtain a positive electrode sheet. On the other hand, 90 g of artificial graphite as a negative electrode active material and 10 g of polyvinylidene fluoride (KYNAR761, manufactured by Arkema) as a binder were added to 20 g of composition (F-35) and mixed uniformly to prepare a paste-like negative electrode active material composition. This paste-like negative electrode active material composition was applied to one side of a copper foil (negative electrode current collector: thickness 20 µm) and dried to obtain a negative electrode sheet.

### (Charge and discharge test)

The obtained positive electrode sheet and negative electrode sheet, and a separator made of polyethylene were punched into a circular shape. One positive electrode sheet and one negative electrode sheet were laminated so as to face each other using an HS cell made of aluminum, and one separator was sandwiched therebetween. The inside was filled with the obtained nonaqueous electrolytic solution, and then the screws were tightened to prepare an experimental battery. The lithium battery was used to perform discharge capacity and cycle tests at a charge/discharge rate of 0.2 C (constant current mode) and 3.5 to 4.2 V using a charge/discharge tester (LCDL-3, manufactured by Keiki Center Co., Ltd.). The cycle tests were performed with a 10-minute charge/discharge rest period between each charge and discharge. The discharge capacity and cycle properties of the battery were evaluated according to the following criteria, and the results are shown in Table 9.

### (Discharge capacity)

⊚: Discharge capacity at 1st cycle was 120 mAh/g or more
O: Discharge capacity at 1st cycle was 110 mAh/g or more
△: Discharge capacity at 1st cycle was 100 mAh/g or more but less than 110 mAh/g
X: The discharge capacity at the first cycle is less than 100 mAh/g.

### (Cycle test)

⊚: The discharge capacity after 10 cycles of the charge and discharge test was 90 % or more of that at the first cycle.
O: The discharge capacity after 10 cycles of the charge and discharge test was 85 % or more and less than 90 % of that at the first cycle.
△: The discharge capacity after 10 cycles of the charge and discharge test was 80 % or more and less than 85 % of that at the first cycle.
×: The discharge capacity after 10 cycles of the charge and discharge test was less than 80 % of that at the first cycle.

### Examples 36 to 38 and Comparative Examples 21 to 23

Examples 36-38 and Comparative Examples 21-23 In Examples 36-38, compositions (F-32) to (F-34) were used, and in Comparative Examples 21-23, compositions (H-21) to (H-23) were used. A non-aqueous electrolyte was prepared in the same manner as in Example 35, and a positive electrode sheet and a negative electrode sheet were prepared, and then a battery was prepared, and the discharge capacity and cyclability were evaluated using the following criteria. The results are shown in Table 9.

**[Table 9]**

| | | Examples | | | | | | | | Comparative Examples | | | | | |
|---|---|---|---|---|---|---|---|---|---|---|---|---|---|---|---|
| | | 35 | | 36 | | 37 | | 38 | | 21 | | 22 | | 23 | |
| Composition (F) or Composition (H) (mass%) | Composition | F-35 | | F-36 | | F-37 | | F-38 | | H-21 | | H-22 | | H-23 | |
| | Compound (A) | A-2 | 89.989 | A-3 | 50 | A-15 | 20 | A-5 | 99.999 | - | - | - | - | A-15 | 100 |
| | Neutralized salt (B) | B-9 | 0.001 | B-7 | 0.5 | B-7 | 1 | B-7 | 0.001 | B-9 | 0.001 | B-7 | 1 | - | - |
| | Compound (C) | C-3 | 10 | C-3 | 49.5 | C-3 | 79 | - | - | C-5 | 99.989 | C-3 | 99 | - | - |
| | Acidic compound (D) | D-4 | 0.01 | - | - | - | - | - | - | D-4 | 0.01 | - | - | - | - |
| Acid value of composition | | 0.2 | | 0.0 | | 0.0 | | 0.0 | | 0.2 | | 0.0 | | 0.0 | |
| LiSFI (mol/L) | | 1.0 | | 1.0 | | 1.0 | | 1.0 | | 1.0 | | 1.0 | | 1.0 | |
| Charge and discharge test | Discharge capacity | ⊚ | | ⊚ | | △ | | ○ | | △ | | △ | | × | |
| | Cycle test | ⊚ | | ○ | | ○ | | ○ | | × | | × | | ○ | |

As was clear from the results shown in Table 9, good battery characteristics were obtained when composition (F) containing compound (A) and neutralizing salt (B) was used as a nonaqueous electrolyte and as a solution for a battery electrode sheet. In other words, it had a high discharge capacity and the decrease in discharge capacity after cycle testing was very small. On the other hand, the comparative examples using a composition containing only A or compound (C) with B added only had insufficient discharge capacity and/or poor cycleability.

### INDUSTRIAL APPLICABILITY

As described above, the composition of the present invention has not harmful, has high safety and stability, is suitable for long-term storage and long-term use as a solvent, a diluent, a dispersant, etc., and can provide various preparations and products by being contained. Specifically, the composition of the present invention can be suitably used as: a solvent containing the composition of the present invention used for dissolving resins, paints, inks, adhesives, pharmaceuticals, agricultural chemicals, fragrances, pigments, dyes, cellulose derivatives, organosilicon polymers, and conductive materials; a diluent containing the composition of the present invention used for dissolving resins, paints, inks, adhesives, pharmaceuticals, agricultural chemicals, fragrances, pigments, dyes, cellulose derivatives, organosilicon polymers, and conductive materials; a dispersant containing the composition of the present invention used for dispersing resins, paints, inks, adhesives, pharmaceuticals, agricultural chemicals, fragrances, pigments, dyes, cellulose derivatives, organosilicon polymers, conductive materials, and carbon materials; a solvent containing the composition of the present invention used for chemical reaction; a solvent containing the composition of the present invention used for analysis by HPLC (liquid chromatography) and/or GPC (gel permeation chromatography); a solvent containing the composition of the present invention used in a diluent, an extractant, a cleaning agent, a stripping agent, a remover, a degreasing agent, a penetrant, an absorbent, a dispersant, and a correcting agent for a lithographic printing plate; a solvent containing the composition of the present invention used for producing and/or dissolving polyimide resin, polyamide resin, polyester resin, polystyrene resin, polyacrylonitrile resin, polyvinyl chloride resin, polyvinylpyrrolidone resin, polyvinyl acetate resin, polycarbonate resin, polyethersulfone resin, polysulfone resin, polyether resin, polyurethane resin, polyesterimide resin, epoxy resin, poly(amide-imide) resin, and polyvinylidene fluoride resin; a cleaning agent containing the composition of the present invention used for cleaning liquid flow paths of a manufacturing facility, a manufacturing instrument, an industrial product, an industrial part, a plastic molded article, a metal part, an electronic part, a recording device filter, a three-dimensional object, an inkjet nozzle, and an ink cartridge; a stripping agent containing the composition of the present invention used for stripping an organic coating film layer on a surface of a plastic molded article, a support material for a three-dimensional object, a resist on a metal thin film, UV resin, urethane resin, and epoxy resin; a liquid crystal alignment treatment agent containing the composition of the present invention used for alignment treatment of liquid crystal molecules; and a nonaqueous electrolytic solution containing the composition of the present invention used for production of a secondary battery.

## Claims

1. A composition comprising: a compound (A) having an N-substituted and/or N,N-disubstituted amide group; and a neutralized salt (B) of an acidic compound and a basic compound.

2. The composition according to claim 1, further comprising an acidic compound that forms the neutralized salt (B), wherein the composition has an acid value of 0.1 to 40 mgKOH/g.

3. The composition according to claim 1 or 2, wherein the compound (A) is an N-substituted and/or N,N-disubstituted propanamide represented by General Formula (1) below: 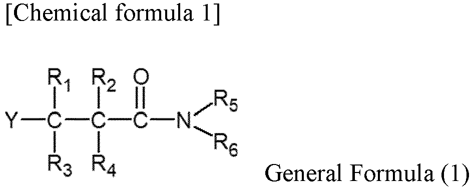 (wherein R₅ and R₆ each independently represent a C1-18 linear or branched saturated or unsaturated alkyl, hydroxyalkyl, aminoalkyl, or alkyl ether group, or each independently represent a C6-18 alicyclic or aromatic hydrocarbon; R₁ to R₄ each independently represent a hydrogen atom, a methyl group, or a hydroxyl group; R₅ and R₆ each independently include a hydrogen atom (except for a case of being simultaneously a hydrogen atom) or one that forms a saturated 5- to 7-membered ring (including one having an oxygen atom) together with a nitrogen atom carrying them; and Y represents a hydrogen atom, a hydroxyl group, an amine group, a C1-18 linear or branched saturated or unsaturated alkyl group, a C6-18 alicyclic or aromatic hydrocarbon, or an alkoxy or amino group represented by General Formula (2) or (3) (wherein R₇ indicates a C1-6 linear or branched alkyl or alkenyl group, R₈ and R₉ each independently indicate a hydrogen atom or a C1-18 linear or branched alkyl or alkyl ether group or alicyclic or aromatic hydrocarbon (except for a case of R₈ and R₉ being simultaneously a hydrogen atom), and R₈ and R₉ may be one that forms a saturated 5- to 7-membered ring (including one having an oxygen atom) together with a nitrogen atom carrying them.)
[Chemical formula 2]
R7-O- General Formula (2)

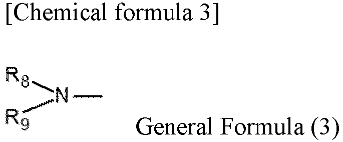

4. The composition according to any one of claims 1 to 3, wherein the compound (A) is a β-alkoxy-N-substituted propanamide and/or a β-alkoxy-N,N-disubstituted propanamide represented by General Formula (4): 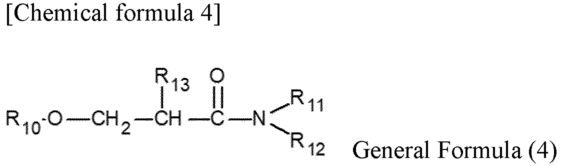 (In the formula, R₁₀ represents a C1-18 linear or branched alkyl group, R₁₁ and R₁₂ each independently represent a hydrogen atom or a C1-4 linear or branched alkyl group (except for a case of being simultaneously a hydrogen atom), and R₁₃ represents a hydrogen atom or a methyl group.)

5. The composition according to any one of claims 1 to 4, wherein the acidic compound is an inorganic and/or organic acid, and the basic compound is an inorganic and/or organic base.

6. The composition according to any one of claims 1 to 5, further comprising a compound (C) having one or more types and or more groups selected from an ether group, an ester group, a hydroxyl group, a urea group, an aryl group, and a sulfinyl group.

7. A solvent comprising the composition according to any one of claims 1 to 6, wherein the solvent is used for dissolving resins, paints, inks, adhesives, pharmaceuticals, agricultural chemicals, fragrances, pigments, dyes, cellulose derivatives, organosilicon polymers, and conductive materials.

8. A diluent comprising the composition according to any one of claims 1 to 6, wherein the diluent is used for diluting resins, paints, inks, adhesives, pharmaceuticals, agricultural chemicals, fragrances, pigments, dyes, cellulose derivatives, organosilicon polymers, and conductive materials.

9. A dispersant comprising the composition according to any one of claims 1 to 6, wherein the dispersant is used for dispersing resins, paints, inks, adhesives, pharmaceuticals, agricultural chemicals, fragrances, pigments, dyes, cellulose derivatives, organosilicon polymers, conductive materials, and carbon materials.

10. A solvent comprising the composition according to any one of claims 1 to 6, wherein the solvent is used for chemical reaction.

11. A solvent comprising the composition according to any one of claims 1 to 6, wherein the solvent is used for analysis by HPLC (High Performance Liquid Chromatography) and/or GPC (Gel Permeation Chromatography).

12. A cleaning agent comprising the composition according to any one of claims 1 to 6, wherein the cleaning agent is used for cleaning liquid flow paths of a manufacturing facility, a manufacturing instrument, an industrial product, an industrial part, a plastic molded article, a metal part, an electronic part, a recording device filter, a three-dimensional object, an inkjet nozzle, and an ink cartridge.

13. A stripping agent comprising the composition according to any one of claims 1 to 6, wherein the stripping agent is used for stripping an organic coating film layer on a surface of a plastic molded article, a support material for a three-dimensional object, a resist on a metal thin film, UV resin, urethane resin, and epoxy resin.

14. A liquid crystal alignment treatment agent comprising the composition according to any one of claims 1 to 6, wherein the liquid crystal alignment treatment agent is used for alignment treatment of liquid crystal molecules.

15. A nonaqueous electrolytic solution comprising the composition according to any one of claims 1 to 6, wherein the nonaqueous electrolytic solution is used for producing a secondary battery.
